# EUROPEAN PATENT APPLICATION

(11) **EP 2 145 935 A1**
(43) Date of publication of application: **20.01.2010**
(21) Application number: 08022533.7
(22) Date of filing: 30.12.2008
(51) Int. Cl.: C09K 5/06, C08L 101/12, F28D 20/02, C08L 33/06, C08L 33/14, D06M 15/263, C08F 120/32, C08F 8/14, C08F 220/18, C08F 220/32

(54) **Functional polymeric phase change materials and methods of manufacturing the same**

(30) Priority: 16.07.2008 US 174607
(71) Applicant: Outlast Technologies, Inc., Boulder, Co. 80301 (US)
(72) Inventor: Hartmann, Mark, Boulder CO 80302 (US); Eyal, Aharon, Jerusalem (IL)
(74) Representative: Lorenz, Markus

(57) **Abstract**

A composition comprising a functional polymeric phase change material, the functional polymeric phase change material carrying at least one reactive function, wherein the reactive function is capable of forming at least a first covalent bond. In certain embodiments, the reactive function is capable of forming at least a first covalent bond with a second material. In other embodiments, the functional polymeric phase change material comprises at least one crystallizable section and may also comprise a backbone chain and a plurality of side chains, wherein the plurality of side chains form the crystallizable section.

## Description

### RELATED APPLICATIONS

The present application claims priority to U.S. Patent Application No. 12/174,607 filed on July 16, 2008, and entitled Functional Polymeric Phase Change Materials and Methods of Manufacturing the Same, the details of which are incorporated herein by reference.

### FIELD OF THE INVENTION

The present invention relates to functionally reactive phase change materials, the use of those materials in various applications, and methods for manufacturing those materials. In particular, but not by way of limitation, the present invention relates to functionally reactive polymeric phase change materials that form a covalent bond with another material.

### BACKGROUND OF THE INVENTION

The modification of textiles to provide temperature regulating properties through the generalized use of phase change materials (PCMs) is known. The use of microencapsulated PCM (mPCM), their methods of manufacture and applications thereof have also been widely disclosed. For example, the following references all use microcapsules in their application:
1. US5366801 - Fabric with Reversible Enhanced Thermal Properties
2. WO0212607 - Thermal Control Nonwoven
3. US6517648 - Process for Preparing a Non-Woven Fibrous Web
4. JP05-156570 - Fibrous Structure having Heat Storage Ability and its Production
5. US20040029472 - Method and compound fabric with latent heat effect
6. US20040026659 - Composition for Fabricating Phase-Change Material Microcapsules and a Method for Fabricating the Microcapsules
7. US20040044128 - Method and Microcapsule Compound Waterborne Polyurethane
8. US2004011989 - Fabric Coating Composition with Latent Heat Effect and Method for Fabricating the Same
9. US20020009473 - Microcapsule, Method for its Production, Use of same, and Coating Liquid with Such
10. JP11350240 - Production of Fiber having Adhered Microcapsule on Surface
11. JP2003-268679 - Yarn having Heat Storage Property and Woven Fabric using the same.

Microcapsules, however, are expensive, can rupture, need additional resinous binders for adhesion, and can cause poor fabric flexibility and properties.

Numerous other disclosures outline the development of temperature regulating textiles by first manufacturing a fiber that contains a PCM or mPCM. For example, the following all disclose compositions, methods of manufacture, processes, and fabrics created from synthetically manufactured fibers. While this might be acceptable in some circumstances, the applications disclosed below omit all of the natural cellulosic and proteinaceous fibers and fabrics such as cotton, flax, leather, wool, silk, and fur. They also do not allow for the post treatment of synthetic fibers or fabrics.
12. US20030035951 - Multi-Component Fibers having Enhanced Reversible Thermal Properties and Methods of Manufacturing Thereof.
13. US4756958 - Fiber with Reversible Enhance Thermal Storage Properties and Fabrics made there from.
14. JP5331754 - Heat Absorbing and Releasing Nonwoven Fabric of Conjugate Fiber
15. JP6041818 - Endothermic and Exothermic Conjugate Fiber
16. JP5239716 - Thermally Insulating Conjugate Fiber
17. JP8311716 - Endothermic and Exothermic Conjugate Fiber
18. JP5005215 - Endothermic and Exothermic Conjugate Fiber
19. JP2003027337 - Conjugate Fiber Having Heat-Storing and Heat-Retaining Property
20. JP07-053917 - Heat-Accumulating and Heat-Insulating Fiber
21. JP2003-293223 - Endothermic Conjugate Fiber
22. JP02289916 - Thermal Storage Fiber
23. JP03326189 - Fiber with Heat Storage Ability
24. JP04-219349 - Heat Storage Composition
25. JP06-234840 - Heat Storage Material
26. JP Appl. # 2001-126109 - Heat Storage Fiber, Method of Producing the same, and Heat Storage Cloth Material
27. JP03352078 - Heat Storage Material
28. JP04-048005 - Fabric Product with Heat Storing Ability
29. WO01255 Thermal Energy Storage Materials
30. JP02317329 - Heat Storage Fiber-Method for Producing the same and Heat Storage Cloth Material
31. W02004007631 - Heat-Storage Material, Composition Therefore, and uses of these
32. JP2003-268358 - Heat-Storage Material use around Body
33. JP2004-011032 - Temperature-Controllable Fiber and Fabric
34. JP2004-003087 - Heat Storable Composite Fiber and Cloth Material having Heat-Storing Properties
35. JP06200417 - Conjugate Fiber Containing Heat-Accumulation Material and its Production
36. CN1317602 - Automatic Temp-Regulating Fibre and its Products
37. US 5885475 - Phase Change Materials Incorporated throughout the Structure of Polymer Fibers

In addition, US Patent Nos. 4851291, 4871615, 4908238, and 5897952 disclose the addition of polyethylene glycol (PEG), polyhydric alcohol crystals, or hydrated salt PCM to hollow and non-hollow fibers. The fibers can be natural or synthetic, cellulosic, protein based, or synthetic hydrocarbon based. The non-hollow fibers have PEG materials deposited or reacted on the surface to act like PCM. These are problematic in that they are very hydrophilic causing excessive moisture absorption problems, and wash durability problems. There is no known disclosure of the use of acrylic, methacrylic polymers or other hydrophobic polymeric PCMs for these applications.

US Patent Nos. 6004662 mentions the use of acrylate and methacrylate polymers with C16 to C 18 alkyl side chains as PCMs but not as unencapsulated or functionalized or reacted to the surface of fibrous textiles.

US Patent Nos. 4259198 and 4181643 disclose the use of crystalline crosslinked synthetic resin selected from the group of epoxide resins, polyurethane resins, polyester resins and mixtures thereof which contain, as crystallite forming blocks, segments of long-chain dicarboxylic acids or diols as PCMs, but not in conjunction with fibers or textiles.

Specific fiber and textile treatments or finishes in which specific compounds are reacted onto the substrate to provide some thermal change (usually based on moisture) have been disclosed. These systems are not based on long side chain alkyl, or long chain glycol acrylates or methacrylates that undergo a thermal phase change to provide improved latent heat effects. Examples include:
38. JP2003-020568 - Endothermic Treating Agent for Fiber Material
39. JP2002-348780 - Hygroscopic and Exothermic Cellulose-Based Fiber
40. JP2001-172866 - Hygroscopic and Exothermic Cellulose-Based Fiber Product having Excellent Heat Retaining Property
41. JP11-247069 - Warm Retainable Exothermic Cloth

Various disclosures describe the use of acrylic or methacrylic copolymers containing long chain alkyl moieties for textile finishes but only for properties such as grease repellency, soil resistance, permanent press properties, and quickness of drying. They do not disclose or mention the use of high purity polymers as PCMs, latent heat storage treatments or textile finishes which can impart temperature regulation and improved comfort. More specifically, they do not disclose advantageous polymer architecture such as mol. wt., mol. wt. distribution or specific copolymer architecture. Example include:
42. US6679924 - Dye fixatives
43. US6617268 - Method for protecting cotton from enzymatic attack by cellulase enzymes
44. US6617267 - Modified textile and other materials and methods for their preparation
45. US6607994 - Nanoparticle-based permanent treatments for textiles
46. US6607564 - Modified textiles and other materials and methods for their preparation
47. US6599327 - Modified textiles and other materials and methods for their preparation
48. US6544594 - Water-repellent and soil-resistant finish for textiles
49. US6517933 - Hybrid polymer materials
50. US6497733 - Dye fixatives
51. US6497732 - Fiber-reactive polymeric dyes
52. US6485530 - Modified textile and other materials and methods for their preparation
53. US6472476 - Oil- and water-repellent finishes for textiles
54. US6387492 - Hollow polymeric fibers
55. US6380336 - Copolymers and oil-and water-repellent compositions containing them
56. US6379753 - Modified textile and other materials and methods for their preparation
57. US20040058006 - High affinity nanoparticles
58. US20040055093 - Composite fibrous substrates having protein sheaths
59. US20040048541 - Composite fibrous substrates having carbohydrate sheaths
60. US20030145397 - Dye fixatives
61. US20030104134 - Water-repellent and soil-resistant finish for textiles
62. US20030101522 - Water-repellent and soil-resistant finish for textiles
63. US20030101518 - Hydrophilic finish for fibrous substrates
64. US20030079302 - Fiber-reactive polymeric dyes
65. US20030051295 - Modified textiles and other materials and methods for their preparation
66. US20030013369 - Nanoparticle-based permanent treatments for textiles
67. US20030008078 - Oil-and water-repellent finishes for textiles
68. US20020190408 - Morphology trapping and materials suitable for use therewith
69. US20020189024 - Modified textiles and other materials and methods for their preparation
70. US20020160675 - Durable finishes for textiles
71. US20020155771 - Modified textile and other materials and methods for their preparation
72. US20020152560 - Modified textiles and other materials and methods for their preparation
73. US20020122890 - Water-repellent and soil-resistant finish for textiles
74. US20020120988 - Abrasion-and wrinkle-resistant finish for textiles

Although present compositions and methods are functional, they do not take advantage of the unique nature and functional aspects that accompanies the use of polymeric materials for the phase change material.

### SUMMARY OF THE INVENTION

Exemplary embodiments of the present invention are summarized below. These and other embodiments are more fully described in the Detailed Description section. It is to be understood, however, that there is no intention to limit the invention to the forms described in this Summary of the Invention or in the Detailed Description. One skilled in the art can recognize that there are numerous modifications, equivalents and alternative constructions that fall within the spirit and scope of the invention as expressed in the claims.

One aspect includes a composition comprising a functional polymeric_phase change material, the functional polymeric phase change material carrying at least one reactive function, wherein the reactive function is capable of forming at least a first covalent bond.

In certain embodiments, the reactive function is capable of forming at least a first covalent bond with a second material. In other embodiments, the functional polymeric phase change material comprises at least one crystallizable section. In other embodiments, the functional polymeric phase change material comprises a backbone chain and a plurality of side chains, wherein the plurality of side chains form the crystallizable section.

In yet further embodiments, the reactive function is selected from the group consisting of glycidyl, epoxy, anhydride, isocyanate, cyanate, amino, amido, imines, imides, azides, azo, amine-formaldehyde, silane, esters, ether, halogenated leaving groups, peroxide, salts, hydroxyl, carboxyl, carbonate, aldehyde, ketone, double bonds, triple bonds, and combinations of the foregoing.

In another embodiment a functional polymeric phase change material is characterized in carrying at least one reactive function, wherein the reactive function is capable of forming a covalent bond.

In further embodiments, a method for the production of functional polymeric phase change material, comprises providing a reactive function carrying polymerizable monomer, providing a side chain forming compound, polymerizing the momoner, and attaching the side chain forming compound.

Many additional aspects and embodiments are described herein as would be recognized by one of ordinary skill in the art.

### BRIEF DESCRIPTION OF THE DRAWINGS

Various objects and advantages and a more complete understanding of the present invention are apparent and more readily appreciated by reference to the following Detailed Description and to the appended claims when taken in conjunction with the accompanying Drawings wherein:

Figures 1 and 2 show representative examples of functional polymeric phase change materials (FP-PCMs) based on a (meth)acrylate backbone with crystallizable side chains based on long chain alky groups or long chain ether groups respectively where R = reactive functional groups;

Figures 1a and 2a show representative examples of FP-PCMs based on a vinyl acetate backbone with crystallizable side chains based on long chain alky groups or long chain ether groups respectively where R = reactive functional groups;

Figures. 1b and 2b show representative examples of FP-PCMs based on a vinyl ether backbone with crystallizable side chains based on long chain alky groups or long chain ether groups respectively where R = reactive functional groups;

Figure 1c shows a representative example of an FP-PCM based on a polyolefin backbone with crystallizable side chains based on long chain alky groups where R = reactive functional groups;

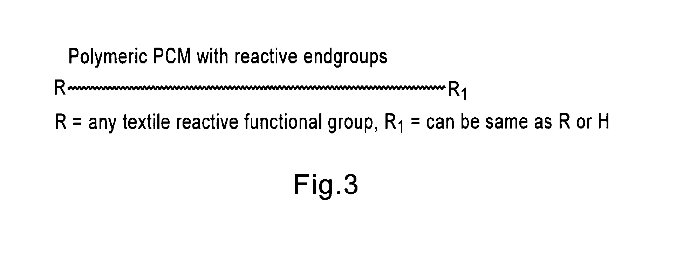

Figure 3 shows a representative example of an FP-PCM based on a crystallizable backbone polymer such as polyesters, polyethers, polyurethanes, polyamides, polyimides, polyacetals, polysulfides, polysulfones, etc where R= reactive functional groups on one end of the polymer chain;

Figure 4 shows a representative example of a method of manufacturing an FP-PCM by reacting 1:1 molar ratio of crystallizable segments, in this case a long chain fatty acid, onto the backbone reactive groups, in this case the glycidyl groups of polyglycidyl methacrylate, creating the reactive functionality as a hydroxyl groups along the crystalizable side chains. Examples 2 and 3 within this specification further described this method;

Figure 5 is a further representative example of a method of manufacturing an FP-PCM by reacting less than a 100% of the backbone reactive groups, in this case the glycidyl groups of polyglycidyl methacrylate, with a crystallizable segment such as a fatty acid, creating crystallizable side chains and leaving unreacted backbone groups (glycidyl groups) for further reaction with substrates;

Figure 6 is a chart depicting the generic classifications of man-made fibers which can incorporate FP-PCM or be made into wovens, knits, nonwoven or other substrates which can be treated with FP-PCM;

Figure 7 is a representative example of a method of manufacturing a polymeric phase change material in accordance with one embodiment;

Figure 8 is another representative example of a method of manufacturing a polymeric phase change material in accordance with another embodiment; and

Figure 9 is a further representative example of a method of manufacturing a polymeric phase change material in accordance with another embodiment.

### DETAILED DESCRIPTION

Definitions - The following definitions apply to various elements described with respect to various aspects of the invention. These definitions may likewise be expanded upon herein.

As used herein, the term "monodisperse" refers to being substantially uniform with respect to a set of properties. Thus, for example, a set of microcapsules that are monodisperse can refer to such microcapsules that have a narrow distribution of sizes around a mode of the distribution of sizes, such as a mean of the distribution of sizes. A further example is a set of polymer molecules with similar molecular weights.

As used herein, the term "latent heat" refers to an amount of heat absorbed or released by a material as it undergoes a transition between two states. Thus, for example, a latent heat can refer to an amount of heat that is absorbed or released as a material undergoes a transition between a liquid state and a crystalline solid state, a liquid state and a gaseous state, a crystalline solid state and a gaseous state, two crystalline solid states or crystalline state and amorphous state.

As used herein, the term "transition temperature" refers to an approximate temperature at which a material undergoes a transition between two states. Thus, for example, a transition temperature can refer to a temperature at which a material undergoes a transition between a liquid state and a crystalline solid state, a liquid state and a gaseous state, a crystalline solid state and a gaseous state, two crystalline solid states or crystalline state and amorphous state... A temperature at which an amorphous material undergoes a transition between a glassy state and a rubbery state may also be referred to as a "glass transition temperature" of the material.

As used herein, the term "phase change material" refers to a material that has the capability of absorbing or releasing heat to adjust heat transfer at or within a temperature stabilizing range. A temperature stabilizing range can include a specific transition temperature or a range of transition temperatures. In some instances, a phase change material can be capable of inhibiting heat transfer during a period of time when the phase change material is absorbing or releasing heat, typically as the phase change material undergoes a transition between two states. This action is typically transient and will occur until a latent heat of the phase change material is absorbed or released during a heating or cooling process. Heat can be stored or removed from a phase change material, and the phase change material typically can be effectively recharged by a source emitting or absorbing it. For certain implementations, a phase change material can be a mixture of two or more materials. By selecting two or more different materials and forming a mixture, a temperature stabilizing range can be adjusted for any desired application. The resulting mixture can exhibit two or more different transition temperatures or a single modified transition temperature when incorporated in the coated articles described herein.

As used herein, the term "polymer" refers to a material that includes a set of macromolecules. Macromolecules included in a polymer can be the same or can differ from one another in some fashion. A macromolecule can have any of a variety of skeletal structures, and can include one or more types of monomeric units. In particular, a macromolecule can have a skeletal structure that is linear or non-linear. Examples of non-linear skeletal structures include branched skeletal structures, such those that are star branched, comb branched, or dendritic branched, and network skeletal structures. A macromolecule included in a homopolymer typically includes one type of monomeric unit, while a macromolecule included in a copolymer typically includes two or more types of monomeric units. Examples of copolymers include statistical copolymers, random copolymers, alternating copolymers, periodic copolymers, block copolymers, radial copolymers, and graft copolymers. In some instances, a reactivity and a functionality of a polymer can be altered by addition of a set of functional groups, such as acid anhydride groups, amino groups, N-substituted amino groups, amide groups, carbonyl groups, carboxy groups, cyclohexyl epoxy groups, epoxy groups, glycidyl groups, hydroxy groups, isocyanate groups, and combinations thereof. Such functional groups can be added at various places along the polymer, such as randomly or regularly dispersed along the polymer, at ends of the polymer, attached as dangling side groups of the polymer, or attached directly to a backbone of the polymer. Also, a polymer can be capable of cross-linking, entanglement, or hydrogen bonding in order to increase its mechanical strength or its resistance to degradation under ambient or processing conditions. As can be appreciated, a polymer can be provided in a variety of forms having different molecular weights, since a molecular weight of the polymer can be dependent upon processing conditions used for forming the polymer. Accordingly, a polymer can be referred to as having a specific molecular weight or a range of molecular weights. As used herein with reference to a polymer, the term "molecular weight" can refer to a number average molecular weight, a weight average molecular weight, or a melt index of the polymer.

Examples of polymers include polyhydroxyalkonates, polyamides, polyamines, polyimides, polyacrylics (e.g., polyacrylamide, polyacrylonitrile, and esters of methacrylic acid and acrylic acid), polycarbonates (e.g., polybisphenol A carbonate and polypropylene carbonate), polydienes (e.g., polybutadiene, polyisoprene, and polynorbornene), polyepoxides, polyesters (e.g., polycaprolactone, polyethylene adipate, polybutylene adipate, polypropylene succinate, polyesters based on terephthalic acid, and polyesters based on phthalic acid), polyethers (e.g., polyethylene glycol or polyethylene oxide, polybutylene glycol, polypropylene oxide, polyoxymethylene or paraformaldehyde, polytetramethylene ether or polytetrahydrofuran, and polyepichlorohydrin), polyfluorocarbons, formaldehyde polymers (e.g., urea-formaldehyde, melamine-formaldehyde, and phenol formaldehyde), natural polymers (e.g., polysaccharides, such as cellulose, chitan, chitosan, and starch; lignins; proteins; and waxes), polyolefins (e.g., polyethylene, polypropylene, polybutylene, polybutene, and polyoctene), polyphenylenes, silicon-containing polymers (e.g., polydimethyl siloxane and polycarbomethyl silane), polyurethanes, polyvinyls (e.g., polyvinyl butyral, polyvinyl alcohol, esters and ethers of polyvinyl alcohol, polyvinyl acetate, polystyrene, polymethylstyrene, polyvinyl chloride, polyvinyl pryrrolidone, polymethyl vinyl ether, polyethyl vinyl ether, and polyvinyl methyl ketone), polyacetals, polyarylates, alkyd-based polymers (e.g., polymers based on glyceride oil), copolymers (e.g., polyethylene-co-vinyl acetate and polyethylene-co-acrylic acid), and mixtures thereof. The term polymer is meant to be construed to include any substances that become available after the filing of this application and that exhibit the general polymeric properties described above.

As used herein, the term "chemical bond" and its grammatical variations refer to a coupling of two or more atoms based on an attractive interaction, such that those atoms can form a stable structure. Examples of chemical bonds include covalent bonds and ionic bonds. Other examples of chemical bonds include attractive interactions between carboxy groups and amide groups.

As used herein, the term "molecular group" and obvious variations thereof, refers to a set of atoms that form a portion of a molecule. In some instances, a group can include two or more atoms that are chemically bonded to one another to form a portion of a molecule. A group can be neutral on the one hand or charged on the other, e.g., monovalent or polyvalent (e.g., bivalent) to allow chemical bonding to a set of additional groups of a molecule. For example, a monovalent group can be envisioned as a molecule with a set of hydride groups removed to allow chemical bonding to another group of a molecule. A group can be neutral, positively charged, or negatively charged. For example, a positively charged group can be envisioned as a neutral group with one or more protons (i.e., H+) added, and a negatively charged group can be envisioned as a neutral group with one or more protons removed. A group that exhibits a characteristic reactivity or other set of properties can be referred to as a functional group or reactive function. Examples of groups include an acid anhydride group, an alkenyl group, an alkyl group, an aldehyde group, an amide group, an amino group, a N-substituted amino group, an aryl group, a carbonyl group, a carboxy group, an epoxy group, an ester group, an ether group, a glycidyl group, a halo group, a hydride group, a hydroxy group, an isocyanate group, a thiol group, a disulfide group, an urea group, and an urethane group.

As used herein, the term "covalent bond" means a form of chemical bonding that is characterized by the sharing of pairs of electrons between atoms, or between atoms and other covalent bonds. Attraction-to-repulsion stability that forms between atoms when they share electrons is known as covalent bonding. Covalent bonding includes many kinds of interactions, including σ-bonding, π-bonding, metal-metal bonding, agostic interactions, and three-center two-electron bonds.

According to a first aspect, the present invention provides a functional polymeric phase change material (FP-PCM) characterized in carrying at least one reactive function, wherein said reactive function is capable of forming a covalent bond with another material or chemical group. Such reactive function can react with another chemical group to form a covalent bond, which reaction is preferably feasible at relatively low temperatures, e.g. below 200°C, more preferably below 100°C.

In a composition in accordance with aspects of the present invention, the FP-PCM comprises a crystallizable section, e.g. being composed of a backbone chain and multiple side chains, which side chains form the crystallizable section.

The reactive function could be placed on (e.g covalently bonded to) any part of the FP-PCM molecule, e.g. on a side chains, along the backbone chain or on at least one of the ends of the backbone chain. According to various embodiments of the invention, the FP-PCM comprises a plurality of reactive functions and those functions are spread regularly, stereospecifically or randomly along the molecule, e.g. along the backbone chain.

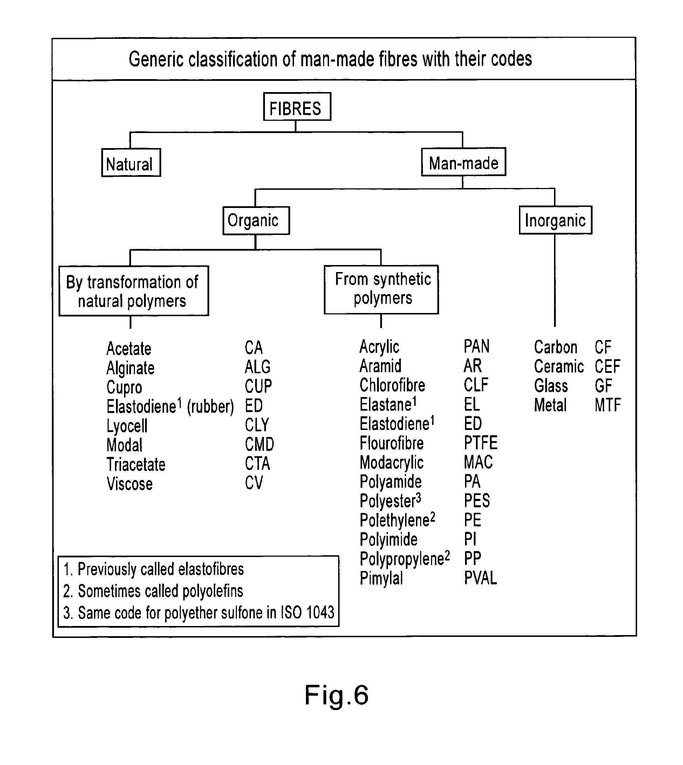

The reactive function could be of various chemical natures. Preferred are reactive functions capable of reacting and forming covalent bonds with reactive functions of various substrates, e.g. cotton, wool, fur, leather, polyester and textiles made from such materials, as well as other base materials. For example, materials made from natural, regenerated or synthetic polymers/fibers/materials may form a covalent bond. Further examples of such substrates include various types of natural products including animal products such as alpaca, angora, camel hair, cashmere, catgut, chiengora, llama, mohair, silk, sinew, spider silk, wool, and protein based materials, various types of vegetable based products such as bamboo, coir, cotton, flax, hemp, jute, kenaf, manila, piña, raffia, ramie, sisal, and cellulose based materials; various types of mineral based products such as asbestos, basalt, mica, or other natural inorganic fibers. Generally, man-made fibers are classified into three classes, those made from natural polymers, those made from synthetic polymers and those made from inorganic materials. Figure 6 depicts the generic classification of man made fibers with their International Bureau for the Standardization of Man-Made Fibres (BISFA) codes. A general description follows.

Fibers from Natural Polymers - The most common natural polymer fibre is viscose, which is made from the polymer cellulose obtained mostly from farmed trees. Other cellulose-based fibers are cupro, acetate and triacetate, lyocell and modal. The production processes for these fibers are given within this disclosure. Less common natural polymer fibers are made from rubber, alginic acid and regenerated protein.

Fibers from Synthetic Polymers - There are very many synthetic fibers, i.e. organic fibers based on petrochemicals. The most common are polyester, polyamide (often called nylon), acrylic and modacrylic, polypropylene, the segmented polyurethanes which are elastic fibers known as elastanes (or spandex in the USA), and specialty fibers such as the high performance aramids.

Fibers from Inorganic Materials - The inorganic man-made fibers are fibers made from materials such as glass, metal, carbon or ceramic. These fibers are very often used to reinforce plastics to form composites.

Examples of suitable reactive functional groups include glycidyl, epoxy, anhydride, isocyanate, cyanate, amino, amido, imines, imides, azides, azo, amine-formaldehyde, silane, esters, ether, halogenated leaving groups, peroxide, salts, hydroxyl, carboxyl, carbonate, aldehyde, ketone, double bonds, triple bonds and combinations thereof.

The following tables illustrate a variety of examples of reactive functions and functional groups that may be used in accordance with one or more aspects of the present invention. It should be clearly understood that by providing examples of specific compositions and methods in the later part of this description, applicant does not intend to limit the scope of the claims to any of those specific composition. To the contrary, it is anticipated that any combination of the functional groups and polymeric phase change materials described herein may be utilized to achieve the novel aspects of the present invention. The claims are not intended to be limited to any of the specific compounds described in this disclosure. Various permutations of these functional groups and polymeric phase change materials may be created that would fall within the scope of the claims.

Hydrocarbons - Functional groups that vary based upon the number and order of π bonds impart different chemistry. Each listing below contains C-H bonds, but each one differs in type (and scope) of reactivity.

| **Chemical class** | **Group** | **Formula** | **Structural Formula** |
|---|---|---|---|
| Alkene | Alkenyl | R₂C=CR₂ | 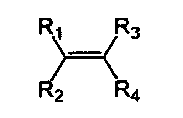 |
| Alkyne | Alkynyl | RC≡CR' | 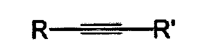 |
| Benzene derivative | Phenyl | RC₆H₅ RPh | 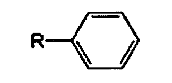 |
| Toluene derivative | Benzyl | RCH₂C₆H₅ RBn | 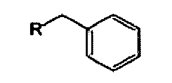 |

There are also a large number of branched or ring alkanes that have specific names, e.g. tert-butyl, bornyl, cyclohexyl, etc.

Groups containing halogens - Haloalkanes are a class of molecule that is defined by a carbon-halogen bond. This bond can be relatively weak (in the case of an iodoalkane) or quite stable (as in the case of a fluoroalkane). In general, with the exception of fluorinated compounds, haloalkanes readily undergo nucleophilic substitution reactions or elimination reactions. The substitution on the carbon, the acidity of an adjacent proton, the solvent conditions, etc. all can influence the outcome of the reactivity.

| **Chemical class** | **Group** | **Formula** | **Structural Formula** |
|---|---|---|---|
| haloalkane | halo | RX | R-X |
| fluoroalkane | fluoro | RF | R-F |
| chloroalkane | chloro | RCI | R-Cl |
| bromoalkane | bromo | RBr | R-Br |
| iodoalkane | iodo | RI | R―I |

Groups containing oxygen - Compounds that contain C-O bonds each possess differing reactivity based upon the location and hybridization of the C-O bond, owing to the electron- withdrawing effect of sp² hybridized oxygen and the donating effects of sp³ hybridized oxygen.

| **Chemical class** | **Group** | **Formula** | **Structural Formula** |
|---|---|---|---|
| Acyl halide | Haloformyl | RCOX | 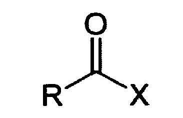 |
| Alcohol | Hydroxyl | ROH | 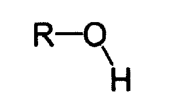 |
| Ketone | Carbonyl | RCOR' | 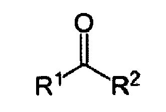 |
| Aldehyde | Aldehyde | RCHO | 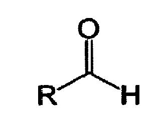 |
| Carbonate | Carbonate ester | ROCOOR | 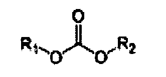 |
| Carboxylate | Carboxylate | RCOO⁻ | 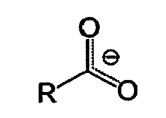 |
| | | | 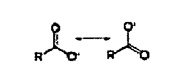 |
| Carboxylic acid | Carboxyl | RCOOH | 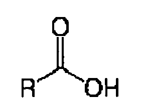 |
| Ether | Ether | ROR' | 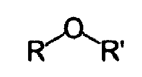 |
| Ester | Ester | RCOOR' | 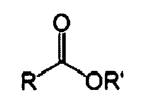 |
| Hydroperoxide | Hydroperoxy | ROOH | 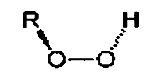 |
| Peroxide | Peroxy | ROOR | 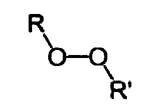 |

Groups containing nitrogen - Compounds that contain Nitrogen in this category may contain C-O bonds, such as amides.

| **Chemical class** | **Group** | **Formula** | **Structural Formula** |
|---|---|---|---|
| Amide | Carboxamide | RCONR₂ | 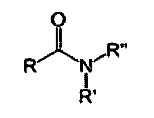 |
| Amines | Primary amine | RNH₂ | 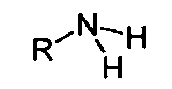 |
| | Secondary amine | R₂NH | 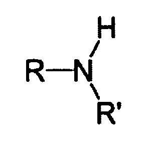 |
| | Tertiary amine | R₃N | 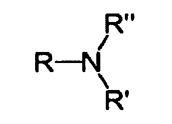 |
| | 4° ammonium ion | R₄N⁺ | 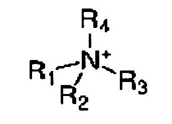 |
| Imine | Primary ketimine | RC(=NH)R' | 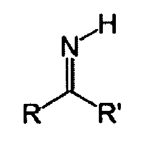 |
| | Secondary ketimine | RC(=NR)R' | 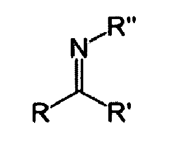 |
| | Primary aldimine | RC(=NH)H | 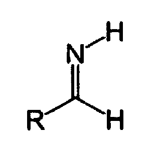 |
| | Secondary aldimine | RC(=NR')H | 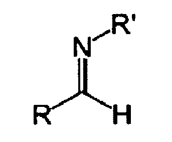 |
| Imide | Imide | RC(=O)NC(=O)R' | 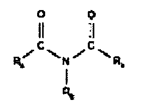 |
| Azide | Azide | RN₃ | 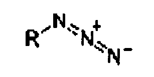 |
| Azo compound | Azo (Diimide) | RN₂R' | 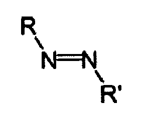 |
| Cyanates | Cyanate | ROCN | 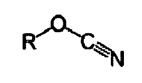 |
| | Isocyanide | RNC | 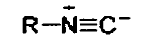 |
| Isocyanates | Isocyanate | RNCO | 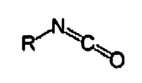 |
| | Isothiocyanate | RNCS | 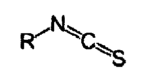 |
| Nitrate | Nitrate | RONO₂ | 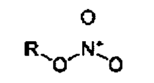 |
| Nitrile | Nitrile | RCN | 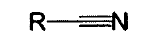 |
| Nitrite | Nitrosooxy | RONO | 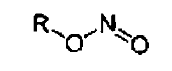 |
| Nitro compound | Nitro | RNO₂ | 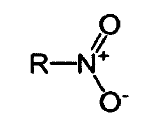 |
| Nitroso compound | Nitroso | RNO | 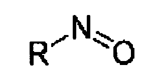 |
| Pyridine derivative | Pyridyl | RC₅H₄N | 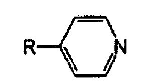 |
| | | | 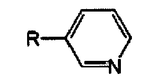 |
| | | | 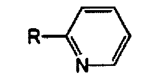 |

Groups containing phosphorus and/or sulfur - Compounds that contain sulfur and phosphorus exhibit unique chemistry due to their ability to form more bonds than nitrogen and oxygen, their lighter analogues on the periodic table.

| **Chemical class** | **Group** | **Formula** | **Structural Formula** |
|---|---|---|---|
| Phosphine | Phosphino | R₃P | 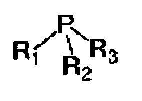 |
| Phosphodiester | Phosphate | HOPO(OR)₂ | 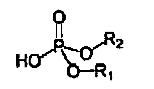 |
| Phosphonic acid | Phosphono | RP(=O)(OH)₂ | 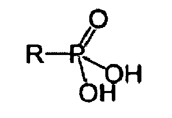 |
| Phosphate | Phosphate | ROP(=O)(OH)₂ | 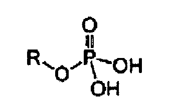 |
| Sulfide or thioether | | RSR' | 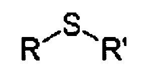 |
| Sulfone | Sulfonyl | RSO₂R' | 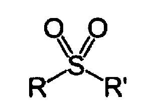 |
| Sulfonic acid | Sulfo | RSO₃H | 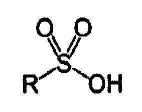 |
| Sulfoxide | Sulfinyl | RSOR' | 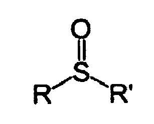 |
| Thiol | Sulfhydry | RSH | 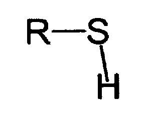 |
| Thiocyanate | Thiocyanate | RSCN | 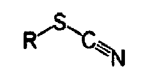 |
| Disulfide | Disulfide | RSSR' | 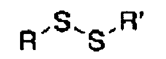 |

Other chemical classes include Organosilanes, Siloxides, Silyl halides, Silyl hydrides, Hydrosilylation, Silenes, Siloles, and Hypercoordinated silicon.

Aspects of a FP-PCM constructed in accordance with the present invention may have a single phase change temperature or multiple such temperatures. According to preferred embodiments, the FP-PCM has at least one phase change temperature in the range between -10° C and 100°C, preferably between 10° C and 60° C and a phase change enthalpy of at least 25 J/g.

Heat absorption and heat release of many of the manufactured and commercially used PCMs take place during melting and solidification, respectively. The energy absorbed or released is mainly the latent heat of melting and the phase change is a solid-liquid phase change. Yet, there is also room for PCMs where the phase change is solid-solid phase change. For example, a PCM may have two or more solid forms, so that energy is absorbed on transfer from a more stable form to a less stable one.

In many cases, the enthalpy of a solid-liquid change is greater than that of a solid-solid phase change, so that per unit weight, the solid-liquid PCMs has a better capability of temperature regulation. Yet, on heat absorption, those PCMs are converted into the liquid form, which escapes, unless well contained. This requires using techniques and materials that add to the cost of production, e.g. containing in the lumen of a hollow synthetic fiber, absorption into particles or micro-encapsulation. In addition, microencapsulation of these containment processes dilutes the PCM, since it requires addition of a shell and possibly also a binder for binding the microcapsules to the substrate. As a result, the capability of temperature regulation per unit of weight of the overall composition is reduced.

Several publications referenced herein deal with polymeric PCMs (P-PCM), which in a way, present an intermediate case between the solid-liquid PCMs and the solid-solid PCMs. P-PCMs are solid both prior to phase change and after it. The difference is in their degree of structure. At lower temperatures, that degree is greater than that at the elevated temperature, so that at a temperature of phase change, P-PCM converts from the more structured form into its less structured one. Typically, in the more structures form, some sections of the polymer are better aligned and more closely compacted. The better aligned sections resemble crystallites. Therefore, the phase change on heating P-PCM is also referred to as change from a more crystallized form to a less recrystallized form. Differently put, at the elevated temperatures, P-PCMs are essentially amorphous. At the lower temperature they have a degree of crystallinity. Similarly, the changes on heat absorption and on heat release could be referred to as derecrystallization and recrystallization, respectively. The related enthalpy could also be referred to as enthalpy of derecrystallization.

Typically, P-PCMs have sections that are capable of being better aligned and more closely compacted. Such sections could be referred to as crystallizable sections. In some embodiments, the functional polymeric PCM described herein in accordance with various aspects of the present invention comprises at least one such crystallizable section. According to an embodiment of the invention, the polymer comprises a backbone and side chains. Preferably, the side chains form a crystallizable section.

As indicated, P-PCMs form an intermediate between the solid-liquid PCMs and solid-solid PCMs. That is since there is decrystallization of crystalline sections as in the solid-liquid case (rather than change between two crystal forms in solid-solid PCMs) on the one hand, but there is no formation of a liquid on the other.

Containment of a P-PCM is in general easier since at no stage it is converted into a liquid form. There is, however, a need to ensure that there is no loss of P-PCM during its application to an article, nor during the use of that article, e.g. repeated washing of textile modified with P-PCM. In addition, applying a P-PCM to various articles should be relatively straightforward, of low cost, be doable at conditions that do not impact the properties and functionality of the article, and should not dilute the temperature-regulating properties of the PCM.

Those requirements are addressed according to various aspects of the present invention by providing a functional polymeric phase change material (FP-PCM) that carries at least one reactive function. As used here, the term "reactive function" means a chemical group (or a moiety) capable of reacting with another chemical group to form a covalent bond. Preferably, such reaction is doable at relatively low temperatures, e.g. below 200°C, more preferably below 100°C and at conditions suitable to handle delicate substrates, e.g. textile. As used herein the term "carrying a function" and variation of this term, means having a function bound to it, e.g. covalently or electrovalently.

The reactive function could be placed on (carried on or covalently bonded to) any part of the FP-PCM molecule, e.g. on a side chains, along the backbone chain or on at least one of the ends of the backbone chain or side chain. According to various embodiments of the invention, the FP-PCM comprises multiple reactive functions and those functions are spread at substantially regular intervals, stereospecifically or randomly along the molecule, e.g. along the backbone chain. Any combination of these is also possible.

The molecular weight of FP-PCM of the present invention is preferably of at least 500 Daltons, more preferably at least 2000 Daltons. Preferably the weight of the crystallizable section forms at least 20%, more preferably at least 50%, and most preferably at least 70% of the total weight of the FP-PCM.

The molecular weight can be monodisperse or polydisperse where all the polymer molecules are the same molecular weight or different molecular weights as defined by the polydispersity. Mn is the number average molecular wt., Mw is weight average molecular wt. and the molecular wt. polydispersity (Pd) is defined by Mn/Mw. A Pd of 1.0 means all polymer molecules are monodisperse and have the same molecular weight. Aspects of a composition constructed in accordance with the present invention have a Pd of between 1.0 - 100 and preferably between 1.0-10.0, most preferably between 1.0 - 5.0.

While each of the FP-PCM molecules carries at least one reactive function, large FP-PCM molecules may carry multiple reactive functions. According to an embodiment of the invention, an FP-PCM carries at least one reactive functions per 10,000 Daltons of the molecular weight and preferably two reactive functions.

A FP-PCM constructed in accordance with one or more aspects of the present invention has a single phase change temperature, or more than one phase change temperature. According to a preferred embodiment, a FP-PCM has at least one phase change temperature in the range between 10°C and 100°C, preferably between -10°C and 60°C and has a phase change enthalpy of at least 25 J/g.

A FP-PCM constructed in accordance with various aspects of the present invention can have a designed stereospecificty. The FP-PCM can be atactic, isotactic or syndiotactic.

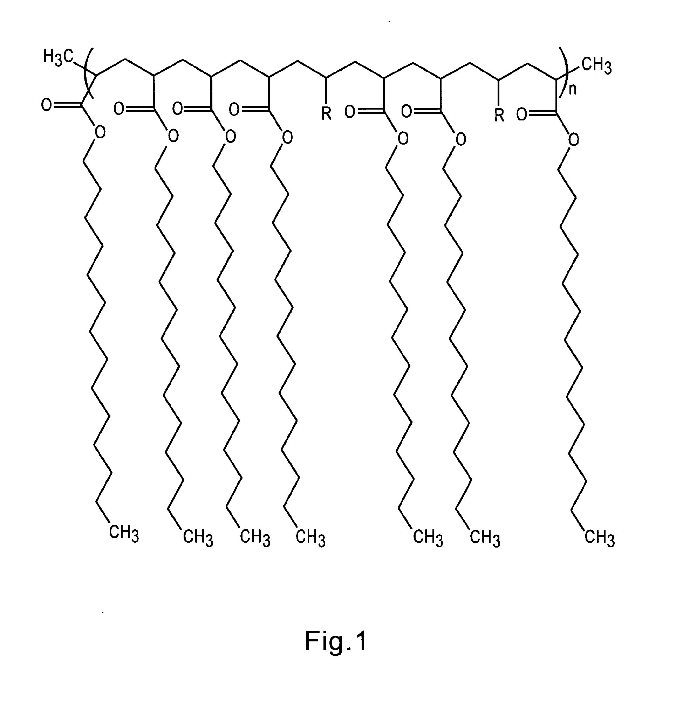

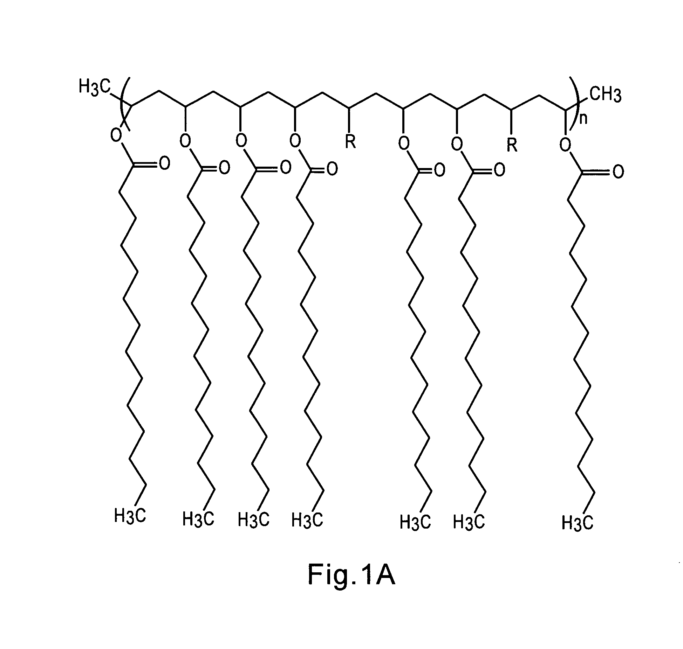

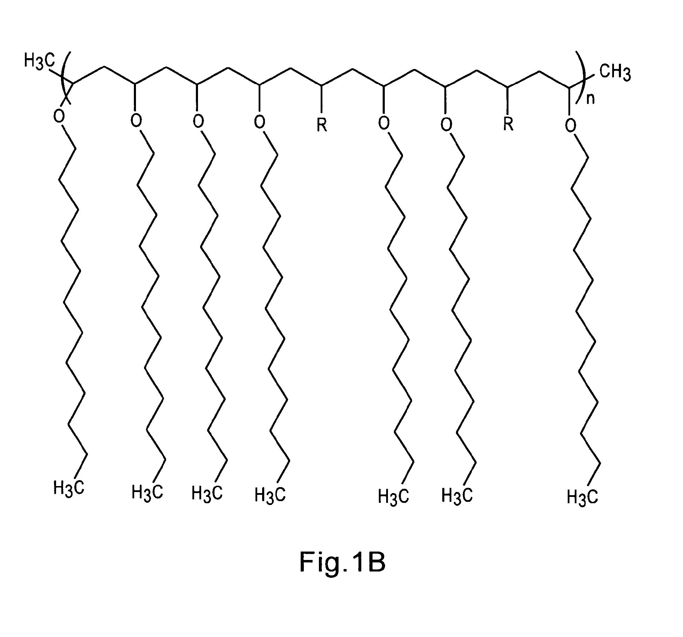

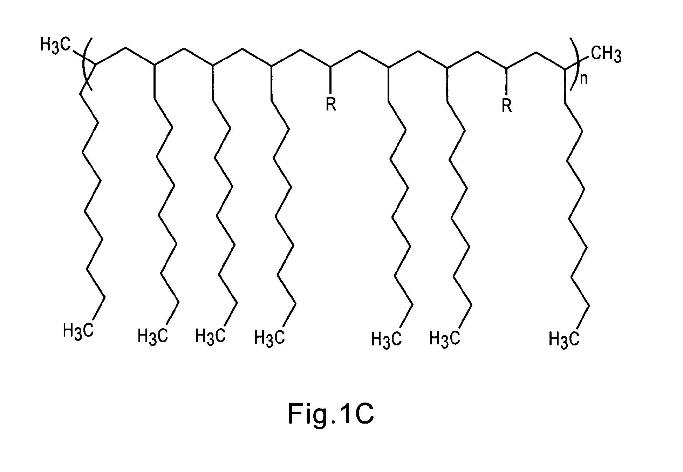

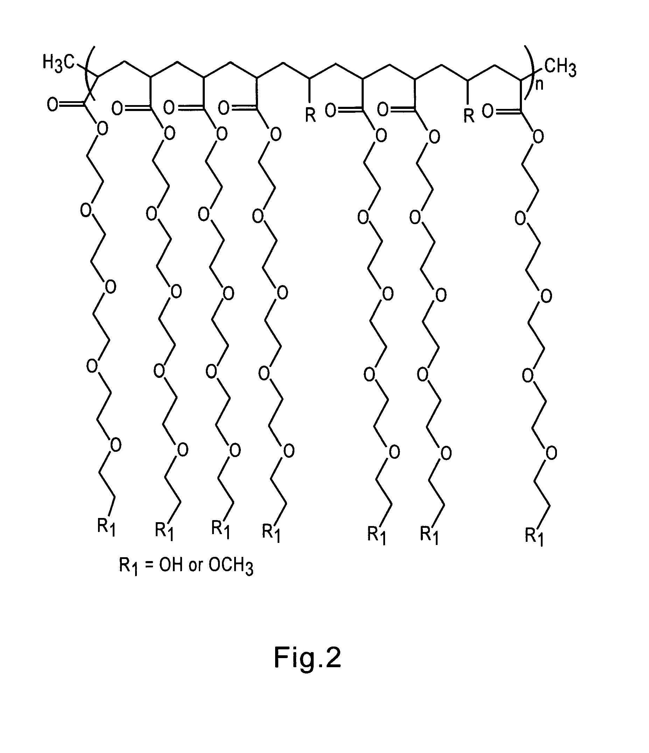

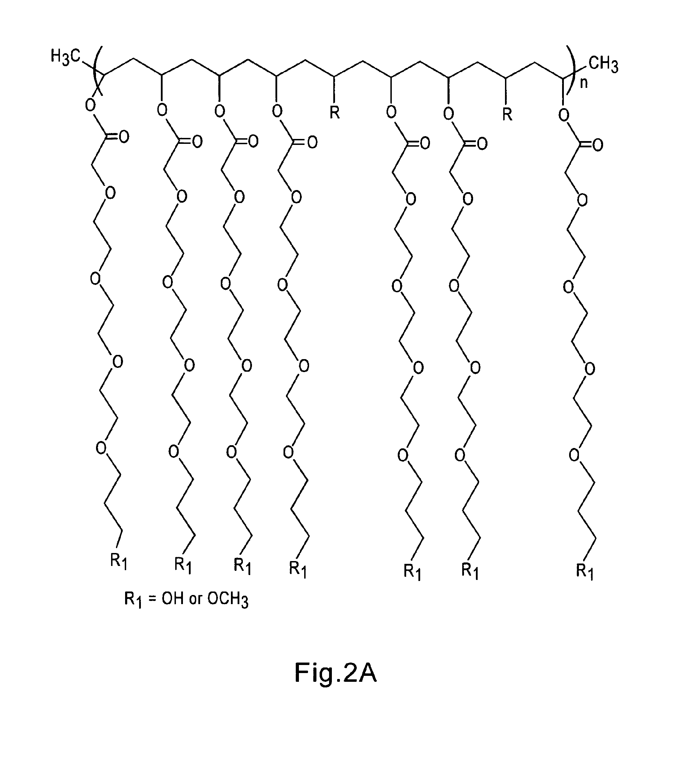

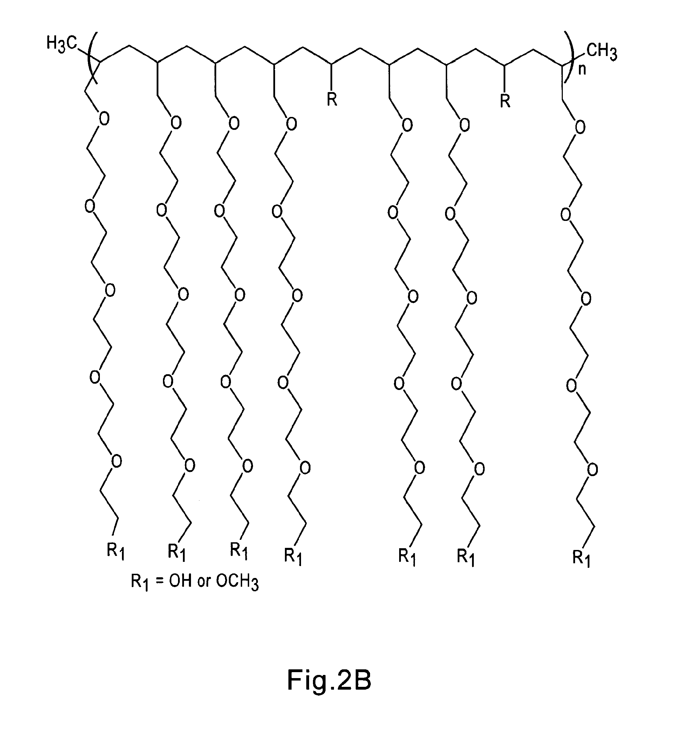

Figures 1 and 2 are schematic drawings of FP-PCMs according to the various aspects of the present invention. Both are composed of a backbone chain and side chains. The FP-PCM in Figure 1 and 1a-1c represent long chain alkyl polyacrylate or polymethacrylate, where 1a is long chain alkyl vinyl esters, 1b is long chain vinyl ethers and 1c is long chain alkyl olefins.

Figures 2, 2a and 2b represent long chain glycol polyacrylates or polymethacrylates, where 2a is long chain glycol vinyl esters and 2b is long chain glycol vinyl ethers.

According to an embodiment of the invention, the FP-PCM has hydrophilic side chains. According to another embodiment of the invention the FP-PCM has hydrophobic side chains. Examples of side chains or monomers which can provide these side chains are in the table below.

**Long Chain Group containing Monomers**

| **R =** | **Monomers** |
|---|---|
| Long chain n-alkyl crystallizible segments | CH₂=CR'CO₂(CH₂)ₙCH₃ R' = CH₃ or H, n =10-25 |
| | Long chain n-alkyl acrylates or methacrylates such as stearyl acrylate or stearyl methacrylate, |
| | |
| | CH₂=CH-O-(CH₂)ₙCH₃, n =10-25 |
| | Long chain n-alkyl vinyl ethers such as stearyl vinyl ether, |
| | |
| | CH₂=CH-O-CO-(CH₂)ₙCH₃, n =10-25, |
| | Long chain n-alkyl vinyl esters such as vinyl stearate, |
| | |
| | CH₂=C-CO-(CH₂)ₙCH₃, n =10-25, |
| | Long chain n-alkyl vinyl ketoness, |
| | |
| | CH₂=CH-(CH₂)ₙCH₃, n =4-25 |
| | Long chain n-alkyl olefins such as undecene, |
| | |
| | or any other long chain n-alkyl containing unsaturated polymerizable monomer |
| Long chain crystallizible glycol segments | CH₂=CR'CO₂(CH₂CH₂O)ₙOX R' = CH₃ or H, n = 1-1,000, X = CH₃ or H |
| | Glycol based acrylates or methacrylates such as polyethyleneglycol methacrylate, polyethyleneglycol acrylate, |
| | |
| | CH₂=CH-(CH₂)ₘ-O-((CH₂)ₙO)_{z}OX m=0-4, n=1-10, z=1-1000, X = CH₃ or H |
| | Glycol based vinyl ethers such as polyethyleneglycol monovinyl ether |
| | |
| | CH₂=CH-O-CO-((CH₂)ₙO)_{z}OX n=1-10, z=1-1000, X = CH₃ or H |
| | glycol based vinyl esters such as polyethyleneglycol monovinyl ester |
| | or any unsaturated polymerizable hydroxyl functional monomer |

In addition other crystallizable sections of P-PCMs are contemplated, including radicals of fatty acids, radicals of long-chain dicarboxylic acids, radicals of fatty alcohols, radicals of dialcohols, polyester-polycarboxylic.

In Figures 1 and 2, R represents one or more of the reactive functions(s) described above. In those figures, the functions are drawn along the backbone, but that is only one option. As indicated above, the functions could also be placed at the end(s) of the backbone, on the side chains and any combination of those. Each FP-PCM may have a single or multiple reactive functions. FP-PCM may also carry multiple reactive functions of a similar chemical nature or a combination of reactive functions of different chemical nature.

The reactive functions could be of various chemical nature. Preferred are reactive functions capable of reacting and forming covalent bonds with reactive functions of various substrates, e.g. cotton, wool, fur leather, polyester and textiles made from such materials. Examples of suitable reactive functional groups are described above and are equally applicable in this embodiment.

As an example, consider FP-PCMs where the reactive function is glycidyl or epoxy such as from glycidyl methacrylate or glycidyl vinyl ether. Such reactive function can react with OH functional groups of cellulosic based textiles such as cotton, with amine functional groups of proteinaceous based textiles such as wool, fur or leather, with hydroxyl or carboxyl groups of polyester based textiles and with amide functional groups of nylon functional resins.

As another example, consider FP-PCMs where the reactive function is anhydride such as from maleic anhydride or itaconic anhydride. Such reactive function can react with OH functional groups of cellulosic based textiles such as cotton, with amine or sulfo functional groups of proteinaceous based textiles such as wool, fur or leather, with hydroxyl groups of polyester based textiles, sulfo groups of sulfo polyesters and with amide/amido functional groups of nylon, urea, urethane, aramide or imide functional resins.

As another example, consider FP-PCMs where the reactive function is isocyanate such as from isocyanato methacrylate, TMI® from Cytec Ind. or blocked isocyanates such as 2-(0-[1'-methylproplyideneamino]carboxyamino) ethyl methacrylate. Such reactive function can react with OH functional groups of cellulosic based textiles such as cotton, with amine or sulfo functional groups of proteinaceous based textiles such as wool, fur or leather, with hydroxyl groups of polyester based textiles, sulfo groups of sulfo polyesters and with amide/amido functional groups of nylon, urethane, aramide or imide functional resins.

As another example, consider FP-PCMs where the reactive function is amino or amine-formaldehyde such as from N-methylolacrylamide. Such reactive function can react with OH or carboxyl functional groups of cellulosic based textiles such as cotton, with amine, sulfo or carboxyl functional groups of proteinaceous based textiles such as wool, fur or leather, with hydroxyl, carboxyl or sulfo groups of polyester or sulfo modified polyester based textiles and with amide/amido functional groups of nylon, urethane, aramide or imide functional resins.

As another example, consider FP-PCMs where the reactive function is silane such as from methacryloxypropyltriethoxysilane. Such reactive function can react with OH or carboxyl functional groups of cellulosic based textiles such as cotton, with amine, sulfo or carboxyl functional groups of proteinaceous based textiles such as wool, fur or leather, with hydroxyl, carboxyl or sulfo groups of polyester or sulfo modified polyester based textiles and with amide/amido functional groups of nylon, urethane, aramide or imide functional resins.

According to another embodiment of the invention, the reactive function can be a double bond, capable of binding to another double bond, providing a cross-linking point, etc.

According to another embodiment, the FP-PCM carries reactive functions as its end group or groups. Examples of such FP-PCMs are α,ω-diglycidyl polyesters, α,ω-diglycidyl ethers, α,ω-diisocyanates, α,ω-diureas, α-glycidyl polyesters, α-glycidyl ethers, α-ureas and α-isocyanates.

Examples of diisocyanates are methylene diphenyl diisocyanate (MDI), toluene diisocyanate (TDI), 1,6- hexamethylene diisocyanate but any multifunctional isocyanate will suffice. Example polyurethanes can be mfg. using alcohols such as aliphatic or aromatic diols of the structure HO-(CH₂)ₙ-OH where n=1-30 and can contain either linear or brached aliphatic segments, cyclic or aromatic ring structures and hydroxyl groups are located in any position but preferably in α,ω position or the para- / trans position on a ring structure. The diols can also be based on polyglycols or poly glycol ethers such as polyethylene glycol, polybutylene glycol, poly tetramethylene glycol, or others based on the structure HO-(CH₂)ₘ-O)ₙ-OH where m, n=1-30 or any combination thereof.

According to another embodiment the FP-PCMs are capable of being bound to various substrates, e.g. cotton, wool, fur leather, polyester and textiles, and other substrates made from such materials via a connecting compound, which compound carries at least two reactive functions of its own. Thus, according to such embodiment, a reactive function of the FP-PCM is capable of reacting with a reactive function of the connecting compound, while another reactive function of the connecting compound is capable of reacting with reactive functions of a substrate. According to the present invention, the bond between the FP-PCM and the connecting compound is of a covalent nature. However, the bond with the substrate could be, electrovalent, covalent or a combination of the two.

According to another embodiment, an FP-PCM carrying at least two reactive functions serves as a connecting compound, capable of connecting between a substrate and another FP-PCM of similar composition or a different one. According to another preferred embodiment, the reactive function of the FP-PCM can be converted into another reactive function, which is more suitable for reacting with particular substrates.

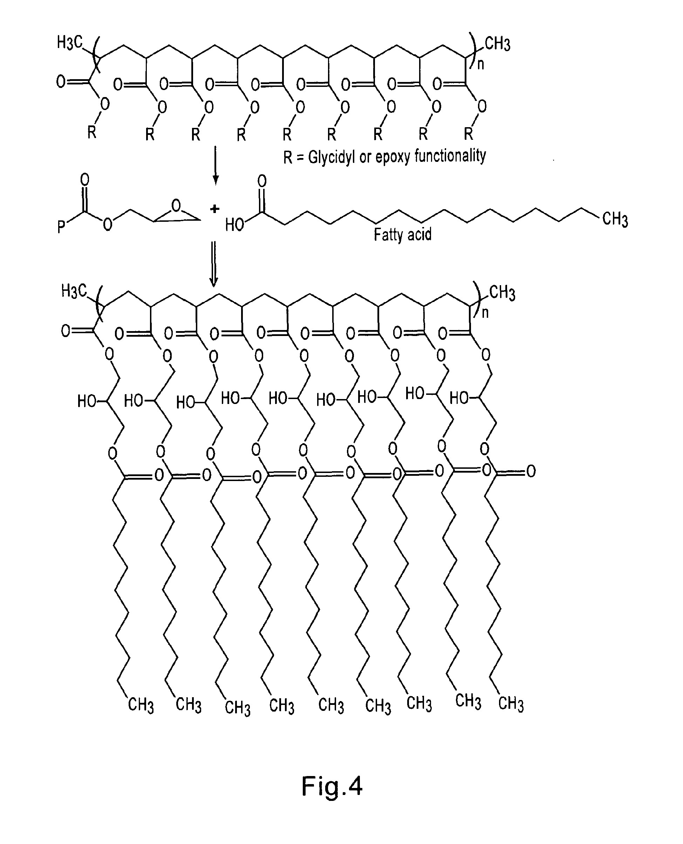

An exemplary FP-PCM and a suitable connecting compound are shown in Figure 4 in conjunction with examples 2 and 3 below.

According to an embodiment of the invention, the reactive function of the FP-PCM is an epoxy or glycidyl function, such as from glycidyl methacrylate. This reactive function can react with acid functionality to yield hydroxyl groups. Examples are acid functional polyesters or any acid functional crystallizable polymer or segment, long chain fatty acids such as palmitic or stearic are preferred. Such reactive function can also react with hydroxyl functionality to yield hydroxyl groups. Examples are long chain alcohols, mono-endcapped polyethylene glycols, other hydroxyl functional polymers and polyglycols, etc. These reactive functions can also react with amine functionality or other nitrogen containing groups to yield hydroxyl groups. Examples are long chain amines, polyamides, polyimines, polyamines, etc.

According to another embodiment of the invention, the reactive function of the FP-PCM is a hydroxyl groups such as from hydroxyethyl (meth)acrylate. Such reactive group can react with epoxy functionality to yield hydroxyl groups, with anhydride functionality to yield carboxyl groups or with aldehyde functionality to yield hydroxyl groups.

According to still another embodiment of the invention, the reactive function of the FP-PCM is an amine or other nitrogen groups. Such reactive function can react with epoxy functionality to yield hydroxyl groups or with anhydride functionality to yield carboxyl groups.

The FP-PCM compounds listed herein can serve as cross-linkers for other FP-PCMs. For instance a hydroxyl functional FP-PCM can be combined with an isocyanate FP-PCM. The isocyanate functionality can both crosslink with the hydroxyl FP-PCM and with a cotton. This provides for attaching both the FP-PCM for different properties and perhaps different transition temperatures.

In another embodiment less than 100% of the functional groups are reacted to form the crystallizable side chains and the remaining are attached to the substrate with other binders, crosslinkers, etc.

In another embodiment, some of the groups are blocked from reacting with the crystallizable side chains, and then unblocked to allow them to react or be crosslinked. For instance, using a hydroxyl function, the backbone with some of the hydroxyl groups are blocked, then ring open polymerizing ethylene oxide to yield crystallized glycol side chains. Another aspect is to then react fatty acids on the ends of the glycol chains to create improved crystallizable side chains, unblocking the hydroxyl groups and using them for other reactions.

Another aspect of the invention is to also use polymeric PCMs from above as reactants in combination with various of the other embodiments disclosed herein. These could include polyester PCM, polyether PCM, or others listed in the table below that have reactive groups.

**Table 1**

| Class of Monomer Unit | Homopolymer |
|---|---|
| Alkanes and Alkenes | Poly-1-decene |
| | Poly-1-heptene |
| | cis-polyoctenamer (Vestenamer® 6213, available from Degussa AG, Frankfurt, Germany) |
| | Poly-1-octene |
| | Poly-1-nonene |
| | trans-polypentemer |
| | Poly-1-undecene |
| | cis-polyisoprene |
| | syndiotactic 1,2-poly(1,3-pentadiene) |
| | 1-methyl-polydodecamethylene |
| Ethers | Polymethyleneoxytetramethylene oxide (Poly-1,3-dioxepane) |
| | Polyhexamethyleneoxymethylene oxide |
| | Polyoxacyclobutane (POX) |
| | n-octadecyl polyacetaldehyde |
| Sulfur Containing Compounds | 3,3-dimethyl-polytrimethylene sulfide |
| | Polymethylene sulfide |
| | Polytetramethylene disulfide |
| | Sulfurtrioxide |
| | 1-methyl-trimethylene -poly-sulfonyldivalerate |
| Silicon Containing Compounds | beta-2-polydiethyl siloxane |
| | Nonamethylene-poly-disiloxanylene dipropionamide -diethyl, dimethyl (Si) |
| | Nonamethylene-poly-disiloxanylene dipropionamide -tetraethyl (Si) |
| | Polymethyl hexadecyl siloxane |
| Amides and Nitrogen Containing Compounds | Poly-(hexamethylene)cyclopropylene dicarboxamide-cis-N,N'-dibutyl |
| | Poly-(hexamethylene)cyclopropylene dicarboxamide-cis-N,N'-diethyl |
| | poly-(hexamethylene)cyclopropylene dicarboxamide-cis-N,N'-diisopropyl |
| | Poly-(hexamethylene)cyclopropylene dicarboxamide-cis-N,N'-dimethyl |
| | Polypentamethylene adipamide-2,2,3,3,4,4 hexafluoro (diamine)-cis-N,N'-dibutyl |
| | Polypentamethylene adipamide-2,2,3,3,4,4 hexafluoro (diamine)-cis-N,N'-diethyl |
| | Polypentamethylene adipamide-2,2,3,3,4,4 hexafluoro (diamine)-cis-N,N'-diisopropyl |
| | Polypentamethylene adipamide-2,2,3,3,4,4 hexafluoro (diamine)-cis-N,N'-dimethyl |
| | Poly-(4,4'-methylene diphenylene sebacamide)-N,N'-diethyl |
| | Polypentamethylene (hexamethylene disulfonyl)-dicaproamide |
| Esters | Poly-[ethylene 4,4'-oxydimethylene-di-2-(1,3-dioxolane)-caprylate] |
| | Polypentamethylene adipate-2,2,3,3,4,4 hexa fluoro |
| | (4-methyl-(R+)-7-polyhydroxyenanthic acid) |
| | Poly-[4-hydroxy tetramethylene-2-(1,3-dioxolane) caprylic acid] (cis or trans) |
| | Polypentamethylene 2,2'-dibenzoate |
| | Polytetramethylene 2,2'-dibenzoate |
| | Poly-1-methyl-trimethylene 2,2' dibenzoate |
| | Polycaprolactone glycol ( Molecular weight = 830) |

Polymeric phase change materials can include polyesters having a melting point in the range of about 0°C to about 40°C that can be formed by, for example, polycondensation of glycols (or their derivatives) with diacids (or their derivatives). The table below sets forth examples of various polyesters that can be formed from different combinations of glycols and diacids.

**Table 2**

| **Glycol** | **Diacid** |
|---|---|
| Ethylene glycol | Carbonic |
| Ethylene glycol | Pimelic |
| Ethylene glycol | Diglycolic |
| Ethylene glycol | Thiodivaleric |
| 1,2- Propylene glycol | Diglycolic |
| Propylene glycol | Malonic |
| Propylene glycol | Glutaric |
| Propylene glycol | Diglycolic |
| Propylene glycol | Pimelic |
| 1,3-butanediol | Sulphenyl divaleric |
| 1,3-butanediol | Diphenic |
| 1,3-butanediol | Diphenyl methane-m,m'-diacid |
| 1,3-butanediol | trans-H,H-terephthalic acid |
| Butanediol | Glutaric |
| Butanediol | Pimelic |
| Butanediol | Azelaic |
| Butanediol | Thiodivaleric |
| Butanediol | Phthalic |
| Butanediol | Diphenic |
| Neopentyl glycol | Adipic |
| Neopentyl glycol | Suberic |
| Neopentyl glycol | Sebacic |
| Pentanediol | Succinic |
| Pentanediol | Glutaric |
| Pentanediol | Adipic |
| Pentanediol | Pimelic |
| Pentanediol | para-phenyl diacetic acid |
| Pentanediol | Diglycolic |
| Hexanediol | Glutaric |
| Hexanediol | 4-Octenedioate |
| Heptanediol | Oxalic |
| Octanediol | 4-Octenedioate |
| Nonanediol | meta-phenylene diglycolic |
| Decanediol | Malonic |
| Decanediol | Isophthalic |
| Decanediol | meso-tartaric |
| Diethylene glycol | Oxalic |
| Diethylene glycol | Suberic |
| Diethylene glycol | Sebacic |
| Diethylene glycol | Phthalic |
| Diethylene glycol | trans-H,H-terephthalic acid |
| Triethylene glycol | Sebacic |
| Triethylene glycol | Sulphonyl divaleric |
| Triethylene glycol | Phthalic |
| Triethylene glycol | Diphenic |
| para-dihydroxy-methyl benzene | Malonic |
| meta-dihydroxy-methyl benzene | Sebacic |
| meta-dihydroxy-methyl benzene | Diglycolic |

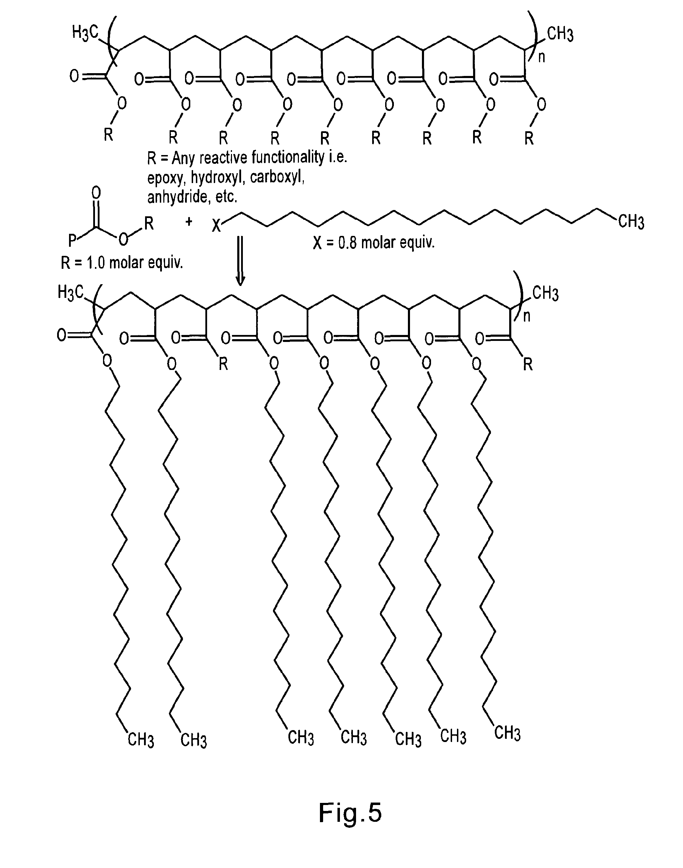

Another aspect of the invention is to create functional polymeric PCMs combining the concepts of above. Partial reaction of the polymeric functionality to create groups which can function as PCMs and unreacted functionality for use in reaction to textile materials. Examples of this type of polymeric PCM are shown in Fig. 5. and described below in the table below.

| **R =** | **X =** | |
|---|---|---|
| Epoxy | Carboxyl, hydroxyl, amine, amide, other nitrogen containing moieties, | |
| Hydroxyl | Carboxyl, epoxy, ester, isocyanates, acid chloride, alkyl halides, silane, anhydride, ketone, aldehyde, methylol-amines, β-ketoester. | |
| Carboxyl | Hydroxyl, epoxy, isocyanates, amines, amides, □ketoester | |
| Anhydride | Hydroxyl, amine, isocyanate | |
| Silane | Hydroxyl, carboxyl, amine | |

Polymeric PCMs of the described invention can be created from many different systems such as a.) polyvinyls (polyvinyl alcohol (pVOH), polymaleic anhydride, polyvinyl ethers, substituted polystyrenes, etc.), b.) polyurethanes in which reactive functional groups are designed to remain along the backbone such as for PU dispersions with carboxyl groups, c.) ring opening polymerizations and copolymerizations such as oxazoline with propiolactone or acrylic acid, d.) ring opening polymerizations onto functional polymers such as caprolactone onto polyhydroxyethyl (meth)acrylate or pVOH.

According to a further aspect, a preparation comprising functional polymeric phase change material (FP-PCM) according to the above descriptions is provided. According to various embodiments, the preparation comprises at least one of an organic solvent, an aqueous medium, a binder (binder or connector can be functional microcapsules), a catalyst for the reaction of said reactive function and any combination thereof. Examples of suitable PCM containing preparations are given in US patent 7,135,424, Coated articles having enhanced reversible thermal properties and exhibiting improved flexibility, softness, air permeability, or water vapor transport properties and US Appl. 20070173154 A1 Coated articles formed of microcapsules with reactive functional groups. The details of these two references are incorporated by reference in their entirety.

According to one embodiment, such preparation is a solution of a FP-PCM in a suitable solvent, which solvent could be organic or aqueous. According to another embodiment, the preparation is a solid mixture comprising the FP-PCM and at least one other compound, e.g. one selected from a group consisting of binders, catalysts facilitating reactions of reactive functions on FP-PCM, connecting compounds and compounds capable of modifying the reactive functions on the FP-PCM. According to still another embodiment, the preparation is a solution comprising the FP-PCM and at least one other compound, e.g. one selected from the same group.

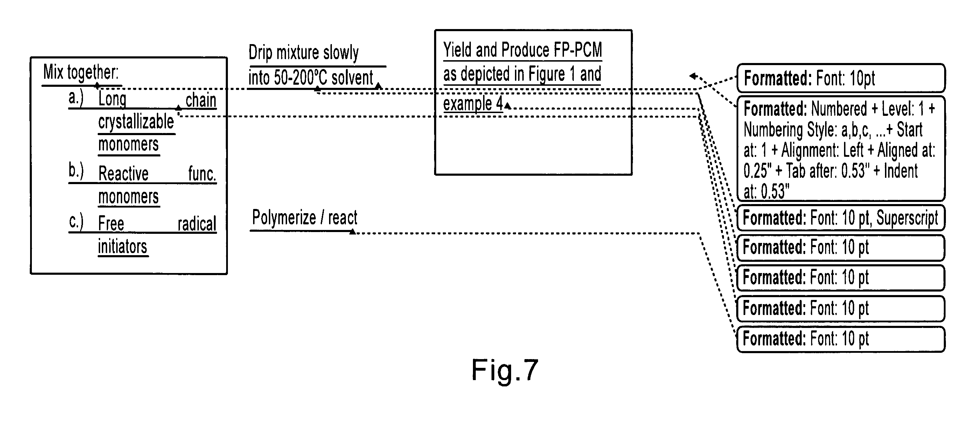

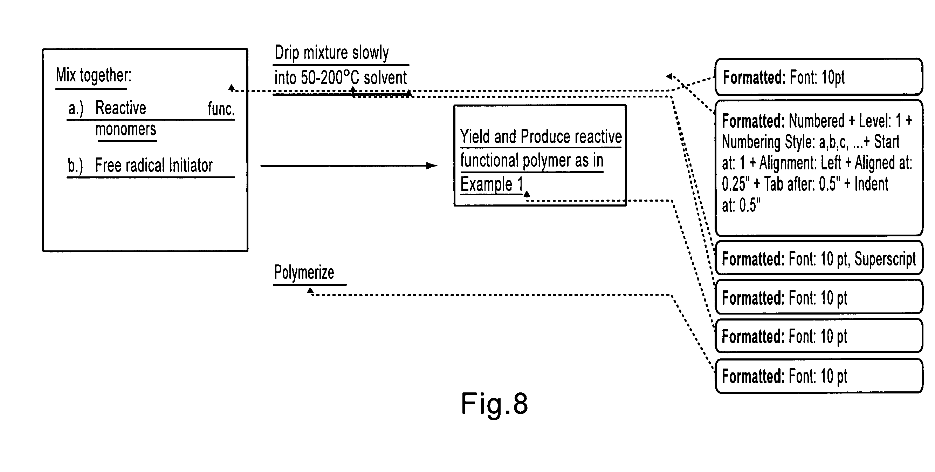

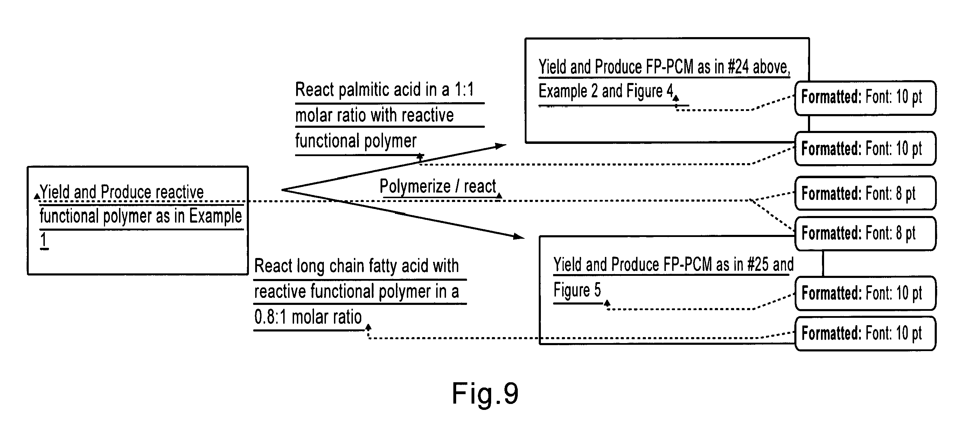

According to yet another aspect, a method for the production of functional polymeric phase change material according to any of the previous descriptions is provided. In one example, the method comprises one or more of the following steps:
1. Organic or inorganic solvent polymerization
2. Aqueous or emulsion polymerization
3. Steady state or equilibrium polymerization
4. Solid state polymerization
5. Batch and/or continuous polymerization
6. Gas phase and/or plasma polymerization
7. Suspension and/or precipitation polymerization
8. Living polymerization
9. Stereospecific polymerization
10. Free radical polymerization of acrylates, methacrylate, vinyl or olefin monomers
11. Cationic, anionic or metallic, metallocene, Ziegler-Natta, polymerization
12. Group Transfer polymerization
13. Condensation or addition polymerization
14. Ring Opening polymerization
15. Olefin metathesis polymerization
16. Enzyme, bio-based or natural polymerization processes
17. The free radical co-polymerization, solution, gas phase or bulk, of long chain alkyl (meth)acrylate monomers such as stearyl methacrylate with functional group monomers such as glycidyl methacrylate or itaconic acid. Figure 7 describes a manufacturing process along these lines.
18. The free radical co-polymerization, solution, gas phase or bulk, of long chain vinyl monomers such as vinyl stearate with functional group monomers such as glycidyl vinyl ether or itaconic acid.
19. The free radical co-polymerization, solution, gas phase or bulk, of any free radically polymerizable long chain alkyl or ether monomers with a free radically polymerizable functional group monomers. These monomers can include acrylates, methacrylates, olefins, alkenes, alkynes, vinyls, vinyl ethers, vinyl ketones, vinyl acetals, vinyl acetates and mixtures thereof. Examples of reactive functional groups monomers are given in table 3 below with further examples of free radically polymerizable long chain alkyl or ether monomers shown in table 4 below.
20. The ionic (anionic, cationic, metallic, metallocene, Ziegler-Natta, ring-opening) copolymerization, solution, gas phase or bulk, of any polymerizable monomers which can form crystallites and be co-polymer functional group monomers. These monomers can include acrylates, methacrylates, olefins, alkenes, alkynes, aldehydes, ketones, vinyls, vinyl ethers, vinyl ketones, vinyl acetals, vinyl acetates, cyclic monomers such as oxiranes, cyclic ethers, aziridines thiiranes, thietanes, lactones, lactames, carbonates, oxazolines, oxazolidinediones, cyclosiloxanes, phosphoranes and mixtures thereof.
21. Condensation or step growth polymerization, for instance creating a crystallizable polyester with a diol and diacid (See Table 2 above) such as butanediol and azelaic acid with a functional group or blocked functional group monomer such as glycerol.
   R-(diol-CO-O-diacid-Xₘ)ₙ-R, where R can be hydroxyl and/or carboxyl, X= substrate reactive function or functional monomer, and m=0-20.
22. Condensation or step growth polymerization - for instance creating a crystallizable polyurethane with polyethylene glycol and 1,6-hexanediisocyanate with a functional group or blocked functional group monomer such as mono-glycidyl glycerol.
   R-(diol-CO-NH-diisocyanate-Xₘ)ₙ-R, where R can be hydroxyl and/or isocyanate, X= substrate reactive function or functional monomer, and m=0-20.
23. Condensation or step growth polymerization - creating a crystallizable polyester, polyether, polyurea, or polyurethane leaving the functional group on the end of the polymer backbone by carefully controlling the stoichiometric ratio of one monomer or the other. For instance creating a crystallizable polyurethane with polyethylene glycol and 1,6-hexamethylenediisocyanate leaving the isocyanate functional group on the end of the polymer backbone by carefully controlling the stoichiometric ratio of the 1,6-hexamethylenediisocyanate to provide a slight excess.
24. The graft copolymerization of a multifunctional backbone polymer with materials to form crystallizable side chains. For instance the reaction of palmitic acid with polyglycidyl methacrylate., esterification of palmitic acid with polyvinyl alcohol, the urethane formation of octadecyl isocyanate with polyvinyl alcohol, the urethane formation of stearyl alcohol with polyisocyanato methacrylate, etc. Figures 8 and 9 describe several manufacturing processes along these lines.
25. The graft copolymerization of a multifunctional backbone polymer with materials to form crystallizable side chains but reacting less than 100% of reactive groups on the backbone to leave reactive functional groups for further reaction to the substrate or for additional crosslinkers and linkage to the substrate. For instance the reaction of palmitic acid with polyglycidyl methacrylate but reacting only ∼90% of the glycidyl groups (0.9 palmitic acid / 1.0 glycidyl groups) leaving the remaining ∼10% glycidyl groups to react and bind to say a wool substrate. The molar ratio can be 0.1-0.999 : 1.0 (10-99.9% of functional groups reacted) but preferred ratio is 0.75-0.95:1.0.
26. The graft copolymerizations as described above but the crystallizable side chains are premade polyesters, polyethers, polyureas, polyurethanes, etc. such as the aliphatic polyesters described in the table above.
27. The graft copolymerization in which the ring opening polymerization of cyclic monomers such as oxiranes, cyclic ethers, aziridines thiiranes, thietanes, lactones, lactames, carbonates, oxazolines, oxazolidinediones, cyclosiloxanes, phosphoranes and mixtures thereof is done using multifunctional backbone polymer. For instance, the ring opening polymerization with correct stoichometric ratios of ethylene oxide or tetramethylene oxide with polyvinyl alcohol to yield crystallizable side chains.
28. The graft copolymerization in which the ring opening polymerization of cyclic monomers such as oxiranes, cyclic ethers, aziridines thiiranes, thietanes, lactones, lactames, carbonates, oxazolines, oxazolidinediones, cyclosiloxanes, phosphoranes and mixtures thereof is done using multifunctional backbone polymer, then further reacting the end group of the side chain with another crystallizable compound. For instance, the ring opening polymerization with correct stoichometric ratios of ethylene oxide or tetramethylene oxide with polyvinyl alcohol to yield crystallizable polyether side chains with hydroxyl functional functional end groups, then further esterifying these endgroups with stearic acid.

Free radical polymerizations can be conducted without solvents or in any solvent but preferred solvents will depend on the chemistry of the final polymer. For example esters, ketones, formamides, ethers and other polar solvents will be preferred for poly(meth)acrylate polymers, non-polar or low polarity solvents such as hexane and other alkanes or toluene and other aromatics will be preferred for polyolefins or long chain alkyl polyvinyls. Free radical polymerizations can also be conducted in aqueous systems. Free radical polymerizations can be initiated by any molecule or compound which under heat, light pressure or sound creates a free radical. Examples of these are peroxide or hydroperoxide compounds preferably t-amyl peroxides, azo initiators, persulfate initiators or uv initiators.

Further examples and methods of specific free radical polymerizations are described such as Group Transfer Polymerization as described by Sogah, D.Y.; et.al in "Group Transfer Polymerization - Polymerization of Acrylic Monomers" Macromolecules 20 (1987) provided improved polymerization and polymer architecture control. Newer methods and improved initiators have been developed to create controlled radical polymerizations as outlined by K. Matyjaszewski in "Controlled Radical Polymerization", ACS Symp. Ser., Washington D.C. (1998). These systems are based on the reversible termination reactions or reversible chain transfer reactions which control the activation/deactivation of the growing chain end. This allows for the creation of a "living radical" which allows sequential addition of monomers to produce well defined AB block copolymers at narrow mol. wt. distributions. Preferable systems and their examples are listed below.

a.) Nitroxide mediated polymerizations such as those derived from TEMPO (2,2,6,6-tetramethylpiperidinyl), for efficient control of vinyl polymerizations, or initiators as outlined in WO9844008.

b.) Phosphonylated nitroxides mediated polymerizations for efficient control of vinyl and acrylic ester monomer polymerizations.

c.) Atom Transfer Radical Polymerizations (ATRP) based on copper complexes or ruthenium salts as outlined in Matyjhaszewski, K.,et.al., Acta Polym. 48 (1997) or in Sawamoto, M., et.al. Trips 4 (1996).

d.) Matyjhaszewski, K.,et.al.in J. Poly. Sci. Part A - Polymer Chemistry 43(7)2005 describes an ATRP block copolymer based on octadecyl methacrylate (stearyl methacrylate) and dimethylaminoethyl methacrylate with low mol.wt. and polydispersity <1.2.

e.) Reversible Addition Fragmentation Transfer (RAFT) polymerization based on various initiators such as thiocarbonylthio compounds as described by Moad, G., et.al. in Australian Journal of Chemistry 58(6), 2005. Other compounds such as dithioesters, dithiocarbamates and trithiocarbonates have also been described to improve the RAFT polymerization providing for well defined polymers.

f.) Well defined multi-block polymers and novel functional initiator system which can be used to create polymeric PCMs are described by Lizotte, J.R. in "Synthesis and Characterization of Tailored Macromolecules via Stable Free Radical Polymerization Methodologies", submitted as doctoral thesis to Virginia Polytechnic Institute, 2003.

**Table 3 Functional Monomers**

| **X =** | **Monomers** |
|---|---|
| Carboxylic Acid | Acrylic acid, Methacrylic acid, maleic acid, itaconic acid, citraconic acid, vinylacetic acid, p-Vinylbenzoic acid, 2-acryloyloxyethylacidphosphate, β-acryloyloxyethyl hydrogen succinnate (or any anhydride reacted modified hydroxyl monomer), or any unsaturated polymerizable carboxylic acid |
| Isocyanate or blocked isocyanate | Isocyanato methacrylate, TMI® from Cytec Ind., 2-methacryloyloxyethyl isocyanate, acryloyloxyethyl isocyanate or blocked isocyanates such as 2-(0-[1'-methylproplyideneamino]carboxyamino)ethyl methacrylate, or any unsaturated polymerizable isocyanate |
| Anhydride | Maleic anhydride, itaconic anhydride, citraconic anhydride or any unsaturated polymerizable anhydride |
| Hydroxyl | Hydroxyethyl methacrylate, hydroxyethyl acrylate, hydroxypropyl methacrylate, hydroxypropyl acrylate, hydroxybutyl methacrylate, hydroxybutyl acrylate, |
| | CH₂=CR'CO₂(CH₂)ₙOH R' = CH₃ or H, n = 2-4 |
| | ethyleneglycol methacrylate, ethyleneglycol acrylate, polyethyleneglycol methacrylate, polyethyleneglycol acrylate, |
| | CH₂=CR'CO₂(CH₂CH₂O)ₙOH R' = CH₃ or H, n = 1-1,000 |
| | Glycol based acrylates or methacrylates |
| | CH₂₌CR'CO₂((CH₂)ₙO)_{z}OH R' = CH₃ or H, n=1-10, z=1-1,000 |
| | allyl alcohol, α-Ethylallyl alcohol, allylcarbinol, ethyleneglycol monovinyl ether ethyleneglycol monovinyl ester, polyethyleneglycol monovinyl ether, polyethyleneglycol monovinyl ester, glycol based vinyl ethers |
| | CH₂₌CH-(CH₂)m-O-((CH₂)ₙO)_{z}OH m=0-4, n=1-10, z=1-1000 |
| | glycol based vinyl esters |
| | CH₂=CH-O-CO-((CH₂)ₙO)_{z}OH n=1-10, z=1-1000 |
| | |
| | or any unsaturated polymerizable hydroxyl functional monomer |
| Epoxy | Glycidyl methacrylate, glycidyl acrylate, Allyl glycidyl ether, 2-vinyloxyethyl glycidyl ether, or any unsaturated polymerizable oxirane monomer |
| Amine or Amino | Acrylamide, methacrylamide, |
| | CH₂=CR'CONECH₂OX |
| | R' = CH₃ or H, X = H, methoxy, ethoxy, propoxy, i-propoxy, butoxy, i-butoxy Vinylamine, or any unsaturated polymerizable amine or amide containing monomer |
| Silane | Methacryloxypropyltrimethoxysilane, methacryloxypropyltriethoxysilane, methacryloxypropyltributoxysilane, Triethoxyvinylsilane, trimethoxyvinylsilane, triacetoxyvinylsilane, triisopropoxyvinylsilane, Tris(methoxyethoxy)vinylsilane, or any other unsaturated polymerizable silane containing monomer |

**Table 4 Long Chain Group Containing Monomers**

| **R =** | **Monomers** |
|---|---|
| Long chain n-alkyl crystallizible segments | CH₂=CR'CO₂(CH₂)ₙCH₃ R' = CH₃ or H, n =10-25 |
| | Long chain n-alkyl acrylates or methacrylates such as stearyl acrylate or stearyl methacrylate, |
| | |
| | CH₂=CH-O-(CH₂)ₙCH₃, n =10-25 |
| | Long chain n-alkyl vinyl ethers such as stearyl vinyl ether, |
| | |
| | CH₂₌CH-O-CO-(CH₂)ₙCH₃, n =10-25, |
| | Long chain n-alkyl vinyl esters such as vinyl stearate, |
| | |
| | CH₂=CH-(CH₂)ₙCH₃, n =4-25 |
| | Long chain n-alkyl olefins such as undecene, |
| | |
| | or any other long chain n-alkyl containing unsaturated polymerizable monomer |
| Long chain crystallizible glycol segments | CH₂=CR'CO₂(CH₂CH₂O)ₙOX R' = CH₃ or H, n = 1-1,000, X = CH₃ or H |
| | Glycol based acrylates or methacrylates such as polyethyleneglycol methacrylate, polyethyleneglycol acrylate, |
| | |
| | CH₂=CH-(CH₂)ₘ-O-((CH₂)ₙO)_{z}OX m=0-4, n=1-10, z=1-1000, X = CH₃ or H |
| | Glycol based vinyl ethers such as polyethyleneglycol monovinyl ether |
| | |
| | CH₂₌CH-O-CO-((CH₂)ₙO)_{z}OX n=1-10, z=1-1000, X = CH₃ or H |
| | glycol based vinyl esters such as polyethyleneglycol monovinyl ester |
| | |
| | or any unsaturated polymerizable hydroxyl functional monomer |

Further examples of monomers can be found in the chapter "Acrylic and Methacrylic Esters" Encyclopedia of Polymer Science and Engineering, vol 1, 2nd ed., 1984 Wiley and sons.

Standard catalysts for esterification, urethane formation, etherification, etc. can be used for the above synthesis and manufacturing processes. Examples of materials that can be used as catalysts include boron salts, hypophosphite salts (e.g., ammonium hypophosphite and sodium hypophosphite), phosphate salts, tin salts (e.g., salts of Sn⁺² or Sn^{+4,} such as dibutyl tin dilaurate and dibutyl tin diacetate), and zinc salts (e.g., salts of Zn⁺²⁾. A desirable amount of a tin salt or a zinc salt that is added to the composition can range from about 0.001 to about 1.0 percent by dry weight, such as from about 0.01 to about 0.1 percent by dry weight. A desirable amount of a boron salt or a phosphate salt that is added to the composition can range from about 0.1 to about 5 percent by dry weight, such as from about 1 to about 3 percent by dry weight. Other examples of materials that can be used as catalysts include alkylated metals, metal salts, metal halides, and metal oxides, where suitable metals include Sn, Zn, Ti, Zr, Mn, Mg, B, Al, Cu, Ni, Sb, Bi, Pt, Ca, and Ba, preferably catalyst salts based on Ti⁺⁴ salts. Organic acids and bases, such as those based on sulfur (e.g., sulfuric), nitrogen (e.g., nitric), phosphorous (e.g., phosphoric), or halides (e.g., F, Cl, Br, and I), can also be used as catalyst. Further examples of materials that can be used as catalysts include acids such as citric acid, itaconic acid, lactic acid, fumaric acid, and formic acid.

Figures 7, 8, and 9 show preferred embodiments of methods of producing a functional polymeric phase change material in accordance with aspects of the present invention.

Several of the foregoing method steps are embodied in the following examples. However, it is not intended that aspects of all of the above methods may be used in connection with the production of compositions, functional polymeric phase change materials, and preparations as described herein.

According to another aspect, the present invention provides an article comprising a functional polymeric phase change material according to the descriptions above.

Examples The following examples are provided as representative of the various combinations and embodiments that may be created through the specific features described above and are not meant to be exclusive as the to scope of the claims. Furthermore, it is intended that the examples provided below not limited the completeness of the subject matter that is more appropriately captured by the full disclosure and description. It is intended that the present description serve as subject matter disclosure for any combination of the element previously disclosed.

Example 1 - Preparation of Polyglycidyl methacrylate

In a flask equipped with stirrer, condenser, nitrogen purge and temperature controller was reacted:

| | Ingredients | Manufacturer | Weight |
|---|---|---|---|
| 1 | n-pentyl propionate | (Dow Chemical, Midland MI) | 37.6 |
| 2 | Glycidyl methacrylate | (Dow Chemical, Midland MI) | 85.5 |
| 3 | Di-t-amyl peroxide | (Sigma-Aldrich Corp. Milwaukee WI) | 5.4 |
| 4 | Di-t-amyl peroxide | (Sigma-Aldrich Corp. Milwaukee WI) | 0.2 |

#1 was added to the flask and heated to 152°C under nitrogen. #2 and #3 were combined and added slowly to reaction flask over 5.5 hours. This was let react and additional 0.5 hours, then #4 added, let react for 1.0 hour then cooled to yield a 69.4% solution of polyglycidyl methacrylate. This solution was dried for 4 hrs @120°C in a forced air oven to yield 100% dried polyglycidyl methacrylate.

Example 2 - Preparation of Polymeric PCM

In a flask equipped with stirrer, condenser, nitrogen purge and temperature controller was reacted:

| | Ingredients | Weight | Functional Equivalent |
|---|---|---|---|
| 1 | 95% Palmitic Acid | 36.15 | 0.141 |
| 2 | Dried polyGMA from Ex. 1 above | 20.06 | 0.141 |

#1 was added to the flask and heated to 130°C under nitrogen. #2 was added slowly to reaction flask over 0.5 hours. This was let react and additional 3.0 hours, then cooled to yield a polymeric PCM with melt point of 38.5°C and 63.1 J/g latent heat. Figure 4 further describes this example.

Example 3 - Preparation of Polymeric PCM

In a flask equipped with stirrer, condenser, nitrogen purge and temperature controller was reacted:

| | Ingredients | Weight | Functional Equivalent |
|---|---|---|---|
| 1 | 95% Myristic Acid | 34.67 | 0.152 |
| 2 | Dried polyGMA from Ex. 1 above | 21.60 | 0.152 |

#1 was added to the flask and heated to 130°C under nitrogen. #2 was added slowly to reaction flask over 0.5 hours. This was let react and additional 3.0 hours, then cooled to yield a polymeric PCM with melt point of 16.1°C and 29.8 J/g latent heat. Figure 4 further describes this example.

Example 4 - Preparation of Polystearyl methacrylate Polymeric PCM

In a flask equipped with stirrer, condenser, nitrogen purge and temperature controller was reacted:

| | Ingredients | Manufacturer | Weight |
|---|---|---|---|
| 1 | n-pentyl propionate | (Dow Chemical, Midland MI) | 36.1 |
| 2 | SR324 Stearyl methacrylate | (Sartomer Co., Exton PA) | 94.0 |
| 3 | Glycidyl methacrylate | (Dow Chemical, Midland MI) | 6.0 |
| 4 | Di-t-amyl peroxide | (Sigma-Aldrich Corp. Milwaukee WI) | 2.7 |
| 5 | Di-t-amyl peroxide | (Sigma-Aldrich Corp. Milwaukee WI) | 0.5 |

#1 was added to the flask and heated to 152°C under nitrogen. #2, #3 and #4 were combined and added slowly to reaction flask over 3.5 hours. This was let react and additional 1.0 hours, #5 added, let react for 1.5 hour then cooled to yield a 69.7% solution of polystearyl methacrylate -co-glycidyl methacrylate with a melt point of 31.1°C and 83.8 J/g latent heat.

Example 5 - Preparation of Wash Durable Temperature Regulating Textiles with Improved Latent Heat Content

Desized, unbleached, undyed cotton fabric was treated by immersing into solutions of the polymeric PCMs with and without additional crosslinkers or fixatives. The immersed fabrics were then padded to remove excess solution dried for 4 minutes @190°C. The fabrics where rinsed with warm tap water to remove any unreacted polymer then air dried overnight and measured for latent heat content. The fabrics were then washed 5 times per AATCC 143.

| **Ingredients** | **#1** | **#2** | **#3** |
|---|---|---|---|
| | **Weight (grams)** | | |
| Polymeric PCM Ex. 2 | 5.13 | 5.25 | |
| Cymel 385 (Cytec Industries, Inc., West Patterson, NJ) | 1.04 | | |
| Bayhydur VPLS 2306 (Bayer Polymers, Pittsburgh PA) | | 1.18 | |
| Acetone | 10.68 | 11.79 | |
| Polymeric PCM Ex. 4 | | | 30.0 |

| **Wash Durability and Latent Heat Content (J/g)** | | | |
|---|---|---|---|
| Treated Fabric | 8.1 | 14.5 | 37.3 |
| 5x Washes | 5.8 | 12.0 | 31.2 |

Example 6 - Various polymeric PCMs were made similar to example 4 above, but the mol. wt. was varied by changing the amount of peroxide initiator or changing the polymerization solution solids.

| **Sample** | **DSC** | **J/g** | **Melt Peak** | **Mn** | **Mw** | **Mz** | **Pd** |
|---|---|---|---|---|---|---|---|
| 4-123, mfg at 70% solids | Good | 83.8 | 31.1 | 2670 | 8040 | 14600 | 3.01 |
| | | | | | | | |
| 4-135, mag at 75% solids | Acceptable | 73.5 | 33.5 | 4170 | 21400 | 50400 | 5.13 |
| 4-144, mfg at 100% solids | Poor | 63.6 | 26.2 | 4680 | 39200 | 232400 | 8.38 |

Example 7 - Above polymeric PCM, 4-123, was dried to 100% solids then added to various polymer fiber solutions both in the lab and in a production pilot plant. This solution was then either spun into fiber or cast into films, coagulated, and dried to yield polymeric PCM modified products.

Solution A consisted of Acordis Itaconic acid func. CFP polyacrylonitrile polymer dissolved in 1:1 NaSCN:H₂O to give a 10% final solution. Solution B consisted of Novaceta® diacetate dissolved in water/acetone mixture to give a 26.6% solids solution in a wt. ratio of cellulose diacetate/ H₂O / Acetone, 26.6/3.9/69.5. Solution C was based on Novaceta pilot run using polymeric PCM produced at Ortec Inc.

### Example 7 Fiber and Films

| **Sample** | **% poly PCM** | **Theory J/g** | **Measured J/g** | **Thermocyle and C₆ Extr.** | **% <Theory** |
|---|---|---|---|---|---|
| Sol. A | 15.0 | 12.6 | 8.0 | | |
| | | | | | |
| Sol. B | 10.0 | 8.4 | 4.6 | 5.9 | 30 |
| | | | | | |
| Sol. C | 10.0 | 7.1 | 2.4 | 2.9 | 59 |

Those skilled in the art can readily recognize that numerous variations and substitutions may be made in the invention, its use and its configuration to achieve substantially the same results as achieved by the embodiments described herein. Accordingly, there is no intention to limit the invention to the disclosed exemplary forms. Many variations, modifications and alternative constructions fall within the scope and spirit of the disclosed invention as expressed in the claims.

## Claims

1. A composition, comprising:
a functional polymeric_phase change material, the functional polymeric phase change material carrying at least one reactive function, wherein the reactive function is capable of forming at least a first covalent bond.

2. The composition of claim 1, wherein the reactive function is capable of forming at least a first covalent bond with a second material.

3. The composition of claim 1, wherein the functional polymeric phase change material comprises at least one crystallizable section.

4. The composition of claim 3 wherein the functional polymeric phase change material comprises a backbone chain and a plurality of side chains, wherein the plurality of side chains form the crystallizable section.

5. The composition of claim 4, wherein the at least one reactive function is carried on at least one of the side chains.

6. The composition of claim 4, wherein the at least one reactive function is carried on the backbone chain.

7. The composition of claim 6, comprising a plurality of reactive functions spread at substantially regular intervals along the backbone chain.

8. The composition of claim 4, wherein the at least one reactive function is carried at one end of the backbone chain.

9. The composition of claim 1, wherein the reactive function is selected from the group consisting of glycidyl, epoxy, anhydride, isocyanate, cyanate, amino, amido, imines, imides, azides, azo, amine-formaldehyde, silane, esters, ether, halogenated leaving groups, peroxide, salts, hydroxyl, carboxyl, carbonate, aldehyde, ketone, double bonds, triple bonds, sulfer, sulfite, sulfide, sulfate, sulfurous, phosphor, phosphite, phosphide, phosphate, phosphorous, and combinations of the foregoing.

10. The composition of claim 2, wherein the second material is selected from the group consisting of cotton, wool, fur leather, polyester, cellulosic materials, proteinaceous materials, natural materials, regenerated materials, synthetic materials, and textiles made from the foregoing materials.

11. The composition of claim 1, wherein the functional polymeric phase change material is a first phase change material, and the composition further comprises a second phase change material, wherein the first phase change material has a first phase change temperature and the second phase change material has a second phase change temperature.

12. The composition of claim 1, wherein the functional polymeric phase change material has a transition temperature in the range between -10° C and 100° C.

13. The composition of claim 1, wherein the functional polymeric phase change material includes at least one reactive function per 10,000 molecular weight units.

14. The composition of claim 3, wherein the at least one crystallizable section is hydrophilic.

15. The composition of claim 3, wherein the at least one crystallizable section is hydrophobic.

16. The composition of claim 1 further comprising at least one crystallizable segment, the at least one crystallizable segment comprising a combination of hydrophilic and hydrophobic segments.

17. The composition of claim 1, wherein the reactive function is stereospecific.

18. The composition of claim 1, wherein the functional polymeric phase change material has a polydispersity of between 1.0 and 100.

19. A functional polymeric phase change material **characterized in** carrying at least one reactive function, wherein the reactive function is capable of forming a covalent bond.

20. The functional polymeric phase change material of claim 19, wherein the reactive function is capable of forming at least a first covalent bond with a second material.

21. The functional polymeric phase change material of claim 19, wherein the functional polymeric phase change material comprises at least one crystallizable section.

22. The functional polymeric phase change material of claim 19 wherein the functional polymeric phase change material comprises a backbone chain and a plurality of side chains, wherein the plurality of side chains form the crystallizable section.

23. The functional polymeric phase change material of claim 19, comprising a plurality of reactive functions spread at random intervals along the backbone chain.

24. The functional polymeric phase change material of claim 19, wherein the reactive function is selected from the group consisting of glycidyl, epoxy, anhydride, isocyanate, cyanate, amino, amido, imines, imides, azides, azo, amine-formaldehyde, silane, esters, ether, halogenated leaving groups, peroxide, salts, hydroxyl, carboxyl, carbonate, aldehyde, ketone, double bonds, triple bonds, sulfer, sulfite, sulfide, sulfate, sulfurous, phosphor, phosphite, phosphide, phosphate, phosphorous, and combinations of the foregoing.

25. A preparation, comprising:
a functional polymeric phase change material, the functional polymeric phase change material carrying at least one reactive function, wherein the reactive function is capable of forming at least a first covalent bond.

26. A preparation according to claim 30, further comprising at least one of an organic solvent, an aqueous medium, a binder, a catalyst for the reaction of said reactive function and combinations thereof.

27. A method for the production of functional polymeric phase change material, comprising:
providing a reactive function carrying polymerizable monomer;
providing a side chain forming compound;
polymerizing the momoner; and
attaching the side chain forming compound.

28. The method of claim 27, further comprising forming a reactive functions carrying polymeric backbone and reacting the reactive functions on the polymeric backbone with the side chain forming compound.

29. The method of claim 27, further comprising
reacting the side chain forming compound with the reactive functions on said monomer to form a side-chain carrying monomer; and
polymerizing the side-chain carrying monomer.

30. The method of claim 29, wherein polymerizing the side-chain carrying monomer includes a mixture comprising at least the side-chain carrying monomer and the reactive function carrying polymerizable monomer.

31. The method of claim 28, wherein less than 100% of the reactive functions on said polymeric backbone are reacted with said side chain forming compound.

32. The method of claim 31, wherein a fraction of said reactive functions on said polymeric backbone are reacted with a protecting group before reacting at least part of the rest with said side chain forming compound.

33. The method of claim 32, further comprising a step of removing at least part of the protecting groups after said reacting at least part of the rest with said side chain forming compound.

34. The method of claim 28, wherein polymerizing a reactive function carrying monomer forms a reactive functions carrying crystallizable backbone polymer.

35. The method of claim 27, wherein polymerizing the reactive carrying monomer comprises at least one of the methods selected from the group consisting of organic, aqueous or inorganic polymerizations, solid state, batch, continuous, gas phase, or plasma polymerizations, UV, sonic, thermal, pressure, or light initiated polymerizations, free radical, living, cationic, anionic, metallic, metallocene, Ziegler-Natta or group transfer polymerizations, Condensation, addition, ring-opening, or olefin metathesis polymerizations, Enzyme, bio-based, or natural polymerizations
